# EUROPÄISCHE PATENTSCHRIFT

(11) **EP 3 817 173 B1**
(45) Veröffentlichungstag und Bekanntmachung des Hinweises auf die Patenterteilung: **18.10.2023**
(21) Anmeldenummer: 19206507.6
(22) Anmeldetag: 31.10.2019
(51) Int. Cl.: H02H 3/14, G01R 31/52, H02H 5/10, G01R 19/155, H01R 13/66, H02H 1/00, H02H 11/00, H02H 3/05, G01R 31/28, G01R 35/00, H02H 3/04

(54) **SCHUTZLEITER-ÜBERWACHUNGSEINRICHTUNG, STROMVERTEILERVORRICHTUNG UND VERFAHREN ZUM DURCHFÜHREN EINES FUNKTIONSTESTS**
PROTECTIVE EARTH CONDUCTOR MONITORING DEVICE, POWER DISTRIBUTION DEVICE AND METHOD FOR CARRYING OUT A FUNCTIONAL TEST
AGENCEMENT DE SURVEILLANCE D'UN CONDUCTEUR DE PROTECTION, DISPOSITIF DE DISTRIBUTION DE COURANT ET PROCÉDÉ D'EXÉCUTION D'UN TEST DE FONCTIONNEMENT

(43) Veröffentlichungstag der Anmeldung: 05.05.2021
(73) Patentinhaber: Hugo Brennenstuhl GmbH & Co. Kommanditgesellschaft, 72074 Tübingen (DE)
(72) Erfinder: Böddeker, Jürgen, 72074 Tübingen (DE); Hoffmann, Axel, 72760 Reutlingen (DE); Bauer, Wolfram, 72124 Pliezhausen (DE)
(74) Vertreter: Patentanwälte Magenbauer & Kollegen Partnerschaft mbB

(56) Entgegenhaltungen:
- EP-A2- 0 806 825
- DE-A1-102011 081 950
- DE-A1-102012 219 542
- DE-B3-102013 212 739

## Beschreibung

Die Erfindung betrifft eine Schutzleiter-Überwachungseinrichtung zur Erkennung einer Schutzleiterstörung einer elektrischen Leitung, umfassend einen ersten Anschlusspunkt zur Verbindung mit einem Schutzleiter der elektrischen Leitung, und eine Detektionsschaltung mit einem ersten Eingang zum Anlegen eines Messpotentials und einem zweiten Eingang zum Anlegen eines Vergleichspotentials. Die Schutzleiter-Überwachungseinrichtung ist ausgebildet, einen Prüfmodus einzunehmen, in dem der erste Eingang elektrisch mit dem ersten Anschlusspunkt verbunden ist und das am ersten Eingang anliegende Messpotential von dem Potential des ersten Anschlusspunkts bestimmt wird. Die Schutzleiter-Überwachungseinrichtung ist ferner ausgebildet, in dem Prüfmodus unter Verwendung der Detektionsschaltung die Schutzleiterstörung auf Basis des Messpotentials und des Vergleichspotentials zu erkennen und gemäß der erkannten Schutzleiterstörung ein Detektionssignal bereitzustellen.

Die EP 2 945 240 A1 beschreibt eine Schutzleiter-Überwachungseinrichtung. Ein erstes Vergleichspotential wird aus einer gleichgerichteten Netzspannung generiert. Ein Messpotential, das innerhalb einer Halbwelle größer ist als das Vergleichspotential, dient als Indikator dafür, dass eine Schutzleiterstörung vorliegt.

Die EP 3 016 225 B1 beschreibt eine Erkennungsvorrichtung zur Erkennung von Fehlerzuständen eines Schutzleiters. Die Erkennungsvorrichtung umfasst einen MOSFET, dessen Source-Anschluss mit einem Schutzleiter elektrisch verbunden ist und dessen Gate-Anschluss mit einem Sensor mit einer leitenden Sensorfläche elektrisch verbunden ist. An die Sensorfläche kann ein Prüfpotential angelegt werden. Über einen Schalter kann das Prüfpotential abgeschaltet werden. Im Betrieb kann in regelmäßigen Abständen der Schalter kurz geöffnet und wieder geschlossen werden. Sollte dann, ohne dass ein Benutzer die Sensorfläche berührt, trotz geöffnetem Schalter der MOSFET nicht durchschalten, zeigt dies einen Fehler an. Ein solcher Fehler könnte beispielsweise durch einen defekten MOSFET verursacht werden.

Die DE 10 2013 212739 B3 betrifft einen Stecker mit zumindest einem Schutzleiterkontakt zum manuellen Stecken in eine Steckdose mit einem korrespondierenden Schutzleitergegenkontakt aufweisend einen Sensor, der derart an dem Stecker angeordnet ist, dass er von einem Benutzer bei einem normalen manuellen Stecken des Steckers in die Steckdose berührt werden muss, wobei der Sensor derart ausgebildet ist und mit dem Schutzleiterkontakt in Wirkverbindung steht, dass bei einer Berührung des Sensors durch den Benutzer und bei einem gleichzeitigen Anliegen einer Spannung an dem Schutzleiterkontakt ein Strom von dem Schutzleiterkontakt über den Sensor durch den Benutzer zur Erde fließt, sowie eine Erkennungseinrichtung zur Erkennung der Spannung an dem Schutzleiterkontakt aufgrund einer Spannungsdifferenz zwischen dem Schutzleiterkontakt und dem Sensor, wobei die Erkennungseinrichtung derart ausgebildet ist, dass sie bei Erkennung einer Spannung an dem Schutzleiterkontakt eine elektrische Verbindung zwischen zumindest zwei im fehlerfreien Betrieb stromführenden Leitern herstellt.

Die DE 10 2012 219542 A1 betrifft eine Schutzleiterüberwachungsvorrichtung.

Die EP 0 806 825 A2 betrifft eine Fehlerstromschutzschalteinrichtung.

Die DE 10 2011 081950 A1 betrifft ein Haushaltsgerät mit einer Schutzvorrichtung.

Eine Aufgabe der Erfindung besteht darin, die Betriebssicherheit einer Schutzleiter-Überwachungseinrichtung der eingangs genannten Art zu erhöhen.

Die Aufgabe wird durch eine Schutzleiter-Überwachungseinrichtung gemäß Anspruch 1 gelöst. Die Schutzleiter-Überwachungseinrichtung ist ausgebildet, (insbesondere von dem Prüfmodus) in einen Funktionstestmodus zu wechseln und im Funktionstestmodus das am ersten Eingang anliegende Potential zu einem Funktionstestpotential zu ändern und unter Verwendung der Detektionsschaltung einen Funktionstest der Schutzleiter-Überwachungseinrichtung auf Basis des Funktionstestpotentials und des Vergleichspotentials durchzuführen.

Der Funktionstest dient insbesondere dazu, zu testen, ob die Schutzleiterüberwachung auch tatsächlich funktioniert - also ob die Schutzleiter-Überwachungseinrichtung im Prüfmodus eine Schutzleiterstörung erkennen würde.

Erfindungsgemäß wird im Funktionstestmodus das Funktionstestpotential an denjenigen Eingang - nämlich den ersten Eingang - angelegt, an den im Prüfmodus der zu prüfende Schutzleiter angeschlossen ist. An diesem ersten Eingang wird im Funktionstestmodus eine Potentialänderung von dem Messpotential zu dem Funktionstestpotential durchgeführt. Bei einer tatsächlichen Schutzleiterstörung würde ebenfalls an diesem ersten Eingang ein verändertes Potential auftreten. Folglich bildet der Funktionstest den Fall einer Schutzleiterstörung nach, so dass das Ergebnis des Funktionstests ein Indikator dafür ist, wie sich die Schutzleiter-Überwachungseinrichtung bei einer tatsächlichen Schutzleiterstörung verhalten würde. Folglich kann ein aussagekräftiger und verlässlicher Funktionstest erzielt werden, wodurch insgesamt die Betriebssicherheit der Schutzleiter-Überwachungseinrichtung verbessert werden kann.

Vorteilhafte Weiterbildungen sind Gegenstand der Unteransprüche.

Die Erfindung betriff ferner eine Stromverteilervorrichtung zur Bereitstellung einer von der elektrischen Leitung zugeführten Netzspannung an einen oder mehrere Verbraucher, umfassend eine hier beschriebene Schutzleiter-Überwachungseinrichtung.

Die Stromverteilervorrichtung dient insbesondere dazu, einem elektrischen Verbraucher Netzspannung zuzuführen und kann zu diesem Zweck mit mindestens einem Phasenleiter, einem Neutralleiter und einem Schutzleiter der elektrischen Leitung, wie z.B. einer Netzleitung eines Verteilers, verbunden werden. Die Stromverteilervorrichtung dient ferner dazu, einen elektrischen Kontakt zwischen einem Schutzleiteranschluss eines elektrischen Verbrauchers und dem Schutzleiter der elektrischen Leitung herzustellen. Die Stromverteilervorrichtung kann ortsfest ausgebildet sein; d.h. die Stromverteilervorrichtung kann ausgebildet sein, im Betrieb z.B. fest mit einer Gebäudeinstallation verbunden zu sein. Beispielsweise kann die Stromverteilervorrichtung als Steckdose bzw. Steckdoseninstallation oder als Vorrichtung in Hutschienenbauweise ausgebildet sein. Alternativ kann die Stromverteilervorrichtung auch ortsveränderlich ausgebildet sein und beispielsweise einen Stecker aufweisen, so dass sie je nach Bedarf an verschiedenen Orten eingesetzt werden kann und mit Anschlüssen verschiedener elektrischer Leitungen lösbar verbunden werden kann. Beispielsweise kann die Stromverteilervorrichtung als Steckdosenleiste, Steckadapter, Leitungsroller, Baustromverteiler, Anschlussleitung oder Verlängerungsleitung ausgebildet sein.

Die Erfindung betrifft ferner ein Verfahren zum Durchführen eines Funktionstests einer Schutzleiter-Überwachungseinrichtung, die der Erkennung einer Schutzleiterstörung einer elektrischen Leitung dient, umfassend die Schritte: Bereitstellen eines Messpotentials an einem ersten Eingang einer Detektionsschaltung der Schutzleiter-Überwachungseinrichtung, wobei das Messpotential von einem Potential eines Schutzleiters der elektrischen Leitung abhängt, Bereitstellen eines Vergleichspotentials an einem zweiten Eingang der Detektionsschaltung, Ändern des an dem ersten Eingang anliegenden Potentials zu einem Funktionstestpotential und Durchführen, unter Verwendung der Detektionsschaltung, des Funktionstests auf Basis des Funktionstestpotentials und des Vergleichspotentials.

Vorzugsweise wird für das erfindungsgemäße Verfahren die hier beschriebene Schutzleiter-Überwachungseinrichtung oder Stromverteilervorrichtung eingesetzt.

Exemplarische Details und Ausführungsformen werden nachstehend unter Bezugnahme auf die Zeichnung erläutert. Dabei zeigt
- Figur 1: eine schematische Darstellung einer Stromverteilervorrichtung,
- Figur 2: ein Blockschaltbild einer Schutzleiter-Überwachungseinrichtung,
- Figur 3: ein detailliertes Schaltungsdiagramm einer Schutzleiter-Überwachungseinrichtung und
- Figur 4: eine alternative Ausgestaltung einer Schalteinrichtung der Schutzleiter-Überwachungseinrichtung.

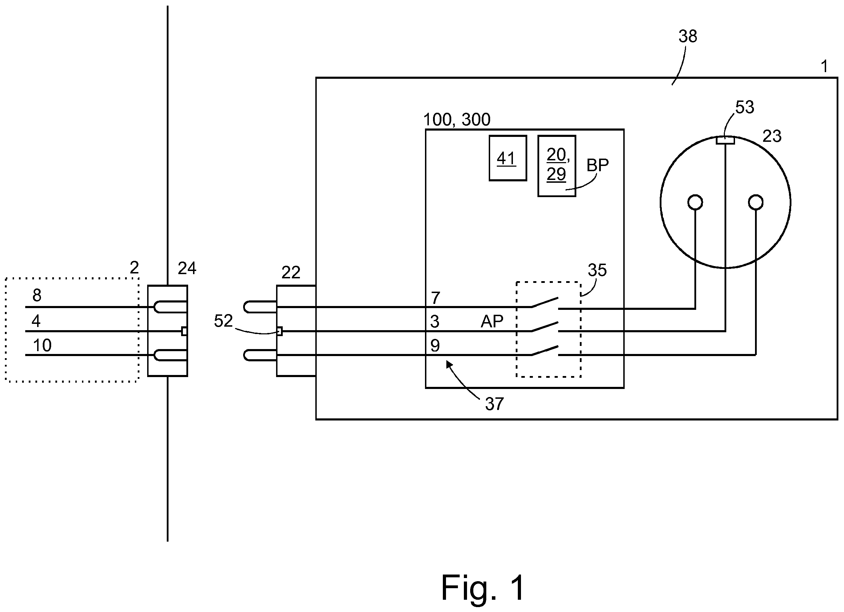

Die Figur 1 zeigt eine Stromverteilervorrichtung 1, die als exemplarischer Anwendungskontext für eine Schutzleiter-Überwachungseinrichtung 100, 300 dient. Die Schutzleiter-Überwachungseinrichtung 100, 300 kann auch für sich genommen - also ohne die übrigen Komponenten der Stromverteilervorrichtung 1 - bereitgestellt sein.

Die Stromverteilervorrichtung 1 dient dazu, einem in der Figur 1 nicht gezeigten Verbraucher eine Netzspannung bereitzustellen, die von einer elektrischen Leitung 2 zugeführt wird. Die elektrische Leitung 2 wird exemplarisch mittels einer fest installierten Steckdose 24 bereitgestellt.

Die elektrische Leitung 2 ist zweckmäßigerweise eine externe elektrische Leitung 2, insbesondere in Bezug auf die Schutzleiter-Überwachungseinrichtung 100, 300 und/oder die Stromverteilervorrichtung 1. Die elektrische Leitung 2 umfasst einen Schutzleiter 4, einen Phasenleiter 8 und einen Neutralleiter 10.

Rein exemplarisch verfügt die Stromverteilervorrichtung 1 über einen Netzstecker 22, der dazu dient, eine elektrische Verbindung zu der elektrischen Leitung 2 bereitzustellen. Alternativ dazu kann die Stromverteilervorrichtung 1 auch auf andere Art und Weise mit der elektrischen Leitung 2 verbunden werden, beispielsweise über eine feste Verdrahtung.

Ferner verfügt die Stromverteilervorrichtung 1 exemplarisch über eine Steckdose 23, in die ein Verbraucher eingesteckt werden kann.

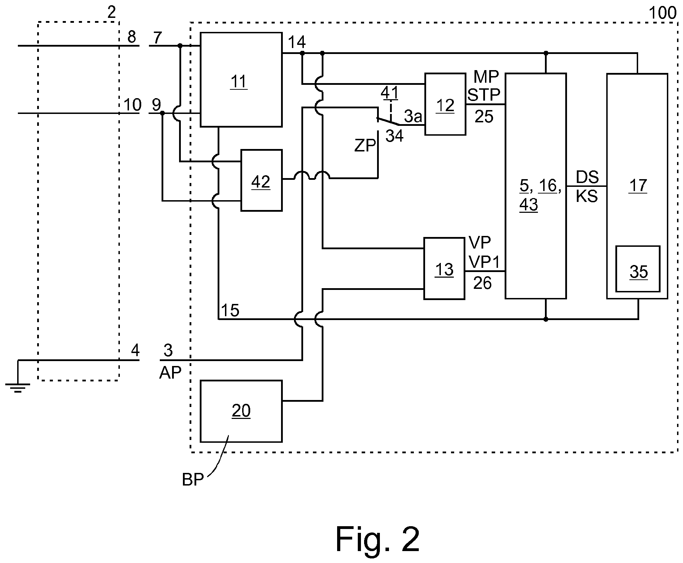

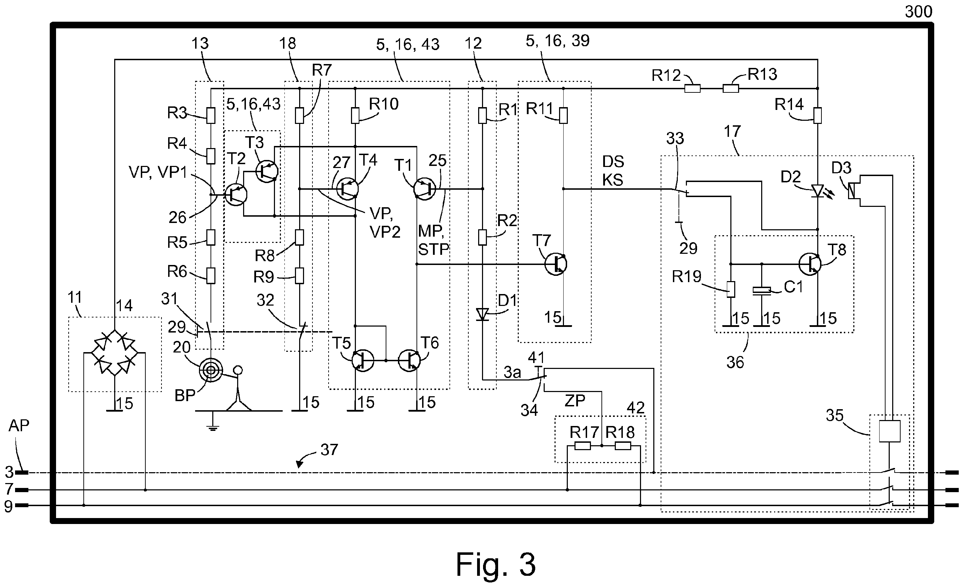

Die Stromverteilervorrichtung 1 umfasst die Schutzleiter-Überwachungseinrichtung 100 oder 300. Ein Blockschaltbild der Schutzleiter-Überwachungseinrichtung 100 ist in der Figur 2 gezeigt. Die Figur 3 zeigt ein Schaltungsdiagramm der Schutzleiter-Überwachungseinrichtung 300. Die Schutzleiter-Überwachungseinrichtung 300 stellt eine exemplarische Schaltungsimplementierung der Schutzleiter-Überwachungseinrichtung 100 dar. Nachstehende, auf die Schutzleiter-Überwachungseinrichtung 100 bezogene Erläuterungen gelten zweckmäßigerweise auch für die Schutzleiterüberwachungseinrichtung 300.

Die Schutzleiter-Überwachungseinrichtung 100, 300 umfasst einen ersten Anschlusspunkt 3 zum Anschluss an den Schutzleiter 4 der elektrischen Leitung 2. Zweckmäßigerweise ist der erste Anschlusspunkt 3 mit einem Schutzleiterkontakt 52 des Netzsteckers 22 elektrisch verbunden und/oder mit einem Schutzleiterkontakt 53 der Steckdose 23 elektrisch verbunden.

Exemplarisch umfasst die Schutzleiter-Überwachungseinrichtung 100, 300 ferner einen zweiten Anschlusspunkt 7 zum Anschluss an den Phasenleiter 8 der elektrischen Leitung 2 und/oder einen dritten Anschlusspunkt 9 zum Anschluss an den Neutralleiter 10 der elektrischen Leitung 2.

Im Betrieb ist der ersten Anschlusspunkt 3 mit dem Schutzleiter 4 verbunden, der zweite Anschlusspunkt 7 ist mit dem Phasenleiter 8 verbunden und der dritte Anschlusspunkt 9 ist mit dem Neutralleiter 10 verbunden. Alternativ kann auch der zweite Anschlusspunkt 7 mit dem Neutralleiter 10 verbunden sein und der dritte Anschlusspunkt 9 mit dem Phasenleiter 8.

Insbesondere ist die Schutzleiter-Überwachungseinrichtung 100, 300 derart ausgebildet, dass es (ohne Beeinträchtigung der Funktion der Schutzleiter-Überwachungseinrichtung 100 und/oder der Stromverteilervorrichtung 1) möglich ist, wahlweise den zweiten Anschlusspunkt 7 mit dem Phasenleiter 8 und den dritten Anschlusspunkt 9 mit dem Neutralleiter 10 zu verbinden oder den zweiten Anschlusspunkt 7 mit dem Neutralleiter 10 und den dritten Anschlusspunkt 9 mit dem Phasenleiter 8 zu verbinden.

Die Schutzleiter-Überwachungseinrichtung 100, 300 und/oder die Stromverteilervorrichtung 1 umfasst eine interne elektrische Leitung 37, die zu der Steckdose 23 und/oder einem (nicht gezeigten) Verbraucher führt und mit der elektrischen Leitung 2 elektrisch verbunden werden kann oder elektrisch verbunden ist, exemplarisch über den Netzstecker 22.

Der Netzstecker 22 ist mit dem ersten Anschlusspunkt 3, dem zweiten Anschlusspunkt 7 und dem dritten Anschlusspunkt 9 elektrisch verbunden. Der Netzstecker 22 oder die Anschlusspunkte 3, 7, 9 sind über die interne elektrische Leitung 37 mit der Steckdose 23 verbindbar oder verbunden. Die interne elektrische Leitung 37 führt exemplarisch über einen Schutzschalter 35, mit dem die interne elektrische Leitung 37 - und damit die Stromversorgung zur Steckdose 23 - unterbrochen werden kann. Die Ansteuerung des Schutzschalters 35 erfolgt zweckmäßigerweise gemäß einem nachstehend erläuterten Detektionssignal DS.

Exemplarisch sind die interne elektrische Leitung 37 und/oder der Schutzschalter 35 Teil der Schutzleiter-Überwachungseinrichtung 100 oder 300. Alternativ dazu können die interne elektrische Leitung 37 und/oder der Schutzschalter 35 zusätzlich zu der Schutzleiter-Überwachungseinrichtung 100, 300 bereitgestellt sein.

In der Figur 1 ist die Stromverteilervorrichtung 1 als ortsveränderliche Stromverteilervorrichtung dargestellt. Alternativ dazu kann die Stromverteilervorrichtung 1 auch ortsfest ausgebildet sein. Beispielsweise können anstelle der in der Figur 1 gezeigten Steckdose 23 und/oder des Netzsteckers 22 feste Anschlussterminals einer ortsfesten Stromverteilervorrichtung vorgesehen sein. Die vorliegende Beschreibung gilt in Analogie auch auf den Fall, dass die Stromverteilervorrichtung ortsfest ausgebildet ist.

Im Folgenden wird näher auf die Schutzleiter-Überwachungseinrichtung 100 eingegangen. Die Erläuterungen gelten zweckmäßigerweise auch für die Schutzleiter-Überwachungseinrichtung 300.

Die Schutzleiter-Überwachungseinrichtung 100 dient dazu, eine Schutzleiterstörung der elektrischen Leitung 2 zu erkennen.

Die Schutzleiter-Überwachungseinrichtung 100 umfasst den ersten Anschlusspunkt 3, der zur Verbindung mit dem Schutzleiter 4 der elektrischen Leitung 2 bestimmt ist. Die Schutzleiter-Überwachungseinrichtung umfasst ferner eine Detektionsschaltung 5 mit einem ersten Eingang 25 zum Anlegen eines Messpotentials MP und einem zweiten Eingang 26 zum Anlegen eines Vergleichspotentials VP.

Die Schutzleiter-Überwachungseinrichtung 100 ist ausgebildet, einen Prüfmodus einzunehmen, in dem der erste Eingang 25 elektrisch mit dem ersten Anschlusspunkt 3 verbunden ist und das am ersten Eingang 25 vorhandene Messpotential MP von dem elektrischen Potential AP des ersten Anschlusspunkts 3 bestimmt wird.

Vorzugsweise ist der erste Eingang 25 im Prüfmodus galvanisch mit dem ersten Anschlusspunkt 3 verbunden, insbesondere über eine ohmsche Verbindung, beispielsweise einen oder mehrere ohmsche Widerstände, und zweckmäßigerweise nicht über einen Kondensator. Zweckmäßigerweise ist unter einer "elektrischen Verbindung" eine solche galvanische Verbindung zu verstehen, also eine ohmsche Verbindung und zweckmäßigerweise keine kapazitive Verbindung und/oder keine induktive Kopplung.

Die Schutzleiter-Überwachungseinrichtung 100 ist ferner ausgebildet, in dem Prüfmodus unter Verwendung der Detektionsschaltung 5 die Schutzleiterstörung auf Basis des Messpotentials MP und des Vergleichspotentials VP zu erkennen und gemäß der erkannten Schutzleiterstörung ein Detektionssignal DS bereitzustellen.

Die Schutzleiter-Überwachungseinrichtung 100 ist ferner ausgebildet, in einen Funktionstestmodus zu wechseln und im Funktionstestmodus das am ersten Eingang 25 anliegende Potential zu einem Funktionstestpotential STP zu ändern und unter Verwendung der Detektionsschaltung 5 einen Funktionstest der Schutzleiter-Überwachungseinrichtung auf Basis des Funktionstestpotentials STP und des Vergleichspotentials VP durchzuführen.

Nachstehend sollen weitere exemplarische Details erläutert werden.

Zunächst soll näher auf den Prüfmodus eingegangen werden.

Die Schutzleiter-Überwachungseinrichtung 100 ist insbesondere ausgebildet, im Prüfmodus als Schutzleiterstörung das Vorhandensein eines Fremdpotentials auf dem Schutzleiter 4 zu detektieren. Dies erfolgt zweckmäßigerweise über einen von der Detektionsschaltung 5 durchgeführten Vergleich zwischen dem Messpotential MP und dem Vergleichspotential VP. Exemplarisch umfasst die Detektionsschaltung 5 eine Komparatoreinrichtung 16, insbesondere eine Differenzverstärkerschaltung 43, die ausgebildet ist, im Prüfmodus das Messpotential MP mit dem Vergleichspotential VP zu vergleichen.

Das Messpotential MP wird auf Basis des Potentials des Schutzleiters 4 erzeugt. Das Vergleichspotential VP wird exemplarisch auf Basis eines an einer Berührungsfläche 20 anliegenden Benutzerpotentials BP erzeugt. Zweckmäßigerweise umfasst die Schutzleiter-Überwachungseinrichtung 100 die elektrisch leitende Berührungsfläche 20, die zur Berührung durch einen Benutzer dient. Die Schutzleiter-Überwachungseinrichtung 100 ist vorzugsweise ausgebildet, das Vergleichspotential VP im Prüfmodus und/oder im Funktionstestmodus auf Basis des an der Berührungsfläche 20 anliegenden Benutzerpotentials BP bereitzustellen.

Ist kein Fremdpotential auf dem Schutzleiter 4 vorhanden, so entspricht das Potential des Schutzleiters 4 in etwa dem lokalen Erdpotential eines Benutzers - also dem Benutzerpotential BP. Berührt der Benutzer in diesem fehlerfreien Fall die Berührungsfläche 20 - legt also sein lokales Erdpotential an der Berührungsfläche 20 an - so stehen das Messpotential MP und das Vergleichspotential VP in einer bestimmten Beziehung zueinander - beispielsweise ist das Messpotential MP in diesem fehlerfreien Fall größer als das Vergleichspotential VP. Ist nun auf dem Schutzleiter 4 ein Fremdpotential - beispielsweise das Potential eines L-Leiters 8 - vorhanden, so ist die Beziehung zwischen dem Messpotential MP und dem Vergleichspotential VP gegenüber dem vorgenannten fehlerfreien Fall verändert. Beispielsweise kann bei einem Fremdpotential auf dem Schutzleiter 4 das Messpotential MP einen Wert annehmen, der kleiner als das Vergleichspotential VP ist. Mittels der Detektionsschaltung 5 kann diese veränderte Beziehung zwischen dem Messpotential MP und dem Vergleichspotential VP erkannt werden und ein entsprechendes Detektionssignal DS ausgegeben werden, das das Vorhandensein der Schutzleiterstörung anzeigt.

Der Funktionstestmodus dient nun insbesondere dazu, zu testen, ob die Erkennung der Schutzleiterstörung, insbesondere die Erkennung des Fremdpotentials, funktioniert. Durch den Funktionstestmodus wird also getestet, ob die Funktionalität der Schutzleiterüberwachung gegeben ist.

Zu diesem Zweck wird im Funktionstestmodus der erste Eingang 25 der Detektionsschaltung 5 auf das Funktionstestpotential STP gesetzt. Das Funktionstestpotential STP entspricht einem Potential, das im Falle der Schutzleiterstörung an dem ersten Eingang 25 anliegen könnte. Zweckmäßigerweise ist die Schutzleiter-Überwachungseinrichtung 100, insbesondere die Detektionsschaltung 5, ausgebildet, im Funktionstestmodus mittels der Komparatoreinrichtung 16, insbesondere der Differenzverstärkerschaltung 43, das Funktionstestpotential STP mit dem Vergleichspotential VP zu vergleichen und auf Basis des Vergleichs das Detektionssignal DS bereitzustellen.

Die Schutzleiter-Überwachungseinrichtung 100 ist insbesondere ausgebildet, in dem Funktionstestmodus durch die Änderung des an dem ersten Eingang 25 anliegenden Potentials zu dem Funktionstestpotential STP eine Schutzleiterstörung für die Detektionsschaltung 5 zu simulieren. Durch die Bereitstellung des Funktionstestpotentials STP an dem ersten Eingang 25 wird die Detektionsschaltung 5 in einen Zustand versetzt, den sie auch einnehmen würde, wenn die Schutzleiterstörung vorliegen würde. Folglich stellt - aus Perspektive der Detektionsschaltung 5 - die Bereitstellung des Funktionstestpotentials STP eine Simulation einer tatsächlichen Schutzleiterstörung dar. Bei gegebener Funktionalität der Schutzleiterüberwachung wird die Detektionsschaltung 5 dementsprechend eine Schutzleiterstörung erkennen, und die Schutzleiter-Überwachungseinrichtung 100 dementsprechend im Funktionstestmodus ein Detektionssignal DS bereitstellen, das eine Schutzleiterstörung anzeigt. Bei nicht gegebener Funktionalität der Schutzleiterüberwachung wird die Detektionsschaltung 5 (trotz angelegtem Funktionstestpotential) keine Schutzleiterstörung erkennen, so dass die Schutzleiter-Überwachungseinrichtung 100 dementsprechend ein Detektionssignal DS bereitstellt, das keine Schutzleiterstörung anzeigt.

Die Schutzleiter-Überwachungseinrichtung 100 umfasst exemplarisch den Schutzschalter 35, der ausgebildet ist, insbesondere in Ansprechen auf eine detektierte Schutzleiterstörung - also insbesondere in Ansprechen auf ein Detektionssignal DS, das eine Schutzleiterstörung anzeigt - eine elektrische Verbindung zu der elektrischen Leitung 2 zu unterbrechen. Exemplarisch ist der Schutzschalter ausgebildet, in Ansprechen auf ein Detektionssignal DS, das eine Schutzleiterstörung anzeigt, die interne elektrische Leitung 37 zu unterbrechen.

Die Schutzleiter-Überwachungseinrichtung 100 ist zweckmäßigerweise ausgebildet, im Funktionstestmodus durch die Änderung des am ersten Eingang 25 anliegenden Potentials zu dem Funktionstestpotential STP ein Schalten des Schutzschalters 35, insbesondere ein Unterbrechen der internen elektrischen Leitung 37, zu bewirken. Vorzugsweise wird im Funktionstestmodus getestet, ob der Schutzschalter 35 in Ansprechen auf eine erkannte Schutzleiterstörung schaltet. Folglich wird im Funktionstestmodus die Funktionalität der gesamten (für die Schutzleiterüberwachung verantwortlichen) Signalkette von dem ersten Eingang 25 bis zum Schutzschalter 35 geprüft.

Zweckmäßigerweise ist die Schutzleiter-Überwachungseinrichtung 100 ausgebildet, in einem Zustand, in dem der Benutzer die Berührungsfläche 20 berührt und die Schutzleiterstörung nicht vorliegt, im Funktionstestmodus durch die Änderung des an dem ersten Eingang 25 anliegenden Potentials zu dem Funktionstestpotential STP eine Schutzleiterstörung für die Detektionsschaltung 5 zu simulieren, so dass die Schutzleiter-Überwachungseinrichtung 100 im Funktionstestmodus ein Detektionssignal DS bereitstellt, das die Schutzleiterstörung anzeigt. Der Funktionstest erfolgt also vorzugsweise in einem Zustand, in dem der Benutzer die Berührungsfläche 20 berührt. Dieser Zustand entspricht zweckmäßigerweise dem Zustand im Prüfmodus, wenn die Schutzleiter-Überwachungseinrichtung 100 prüft, ob die Schutzleiterstörung vorliegt. Mit dem Funktionstest kann insbesondere getestet werden, ob auch dann, wenn der Benutzer die Berührungsfläche 20 berührt, eine Erkennung der Schutzleiterstörung und/oder ein Schalten des Schutzschalters 35 möglich ist.

Die Schutzleiter-Überwachungseinrichtung 100 ist vorzugsweise ausgebildet, im Funktionstestmodus den ersten Eingang 25 elektrisch von dem ersten Anschlusspunkt 3 zu trennen. Exemplarisch umfasst die Schutzleiter-Überwachungseinrichtung 100 einen Funktionstest-Schalter 34 und ist ausgebildet, über den Funktionstest-Schalter 34 im Prüfmodus eine elektrische Verbindung zwischen dem ersten Eingang 25 und dem ersten Anschlusspunkt 3 herzustellen und diese Verbindung im Funktionstestmodus zu trennen.

Zweckmäßigerweise umfasst die Schutzleiter-Überwachungseinrichtung 100 eine Funktionstest-Schaltungsanordnung 42 zur Bereitstellung eines Zuführpotentials ZP und ist ausgebildet, über den Funktionstest-Schalter 34 im Funktionstestmodus eine elektrische Verbindung zwischen dem ersten Eingang 25 und der Schaltungsanordnung 42 herzustellen, um am ersten Eingang 25 das Funktionstestpotential STP auf Basis des Zuführpotentials ZP bereitzustellen. Ferner ist die Schutzleiter-Überwachungseinrichtung 100 zweckmäßigerweise ausgebildet, über den Funktionstest-Schalter 34 im Prüfmodus die elektrische Verbindung zwischen dem ersten Eingang 25 und der Funktionstest-Schaltungsanordnung 42 zu trennen.

Die Schutzleiter-Überwachungseinrichtung 100 umfasst vorzugsweise eine Funktionstest-Betätigungseinrichtung 41, die durch einen Benutzer betätigt werden kann und dazu dient, die Schutzleiter-Überwachungseinrichtung 100 in den Funktionstestmodus zu versetzen. Die Funktionstest-Betätigungseinrichtung 41 ist zweckmäßigerweise als Taste oder Schalter ausgeführt und zweckmäßigerweise für einen Benutzer zugänglich außen an der Schutzleiter-Überwachungseinrichtung 100 und/oder der Stromverteilervorrichtung 1 angeordnet, insbesondere außen an einem Gehäuse 38 der Schutzleiter-Überwachungseinrichtung 100 und/oder der Stromverteilervorrichtung 1. Vorzugsweise ist die Funktionstest-Betätigungseinrichtung 41 mit dem Funktionstest-Schalter 34 gekoppelt, so dass der Funktionstest-Schalter 34 über die Funktionstest-Betätigungseinrichtung 41 betätigbar ist.

Die Schutzleiter-Überwachungseinrichtung 100 ist zweckmäßigerweise ausgebildet, in Ansprechen auf einen ersten Betätigungszustand der Funktionstest-Betätigungseinrichtung 41 den Prüfmodus einzunehmen und in Ansprechen auf einen zweiten Betätigungszustand der Funktionstest-Betätigungseinrichtung 41 den Funktionstestmodus einzunehmen.

Gemäß einer rein optionalen Ausgestaltung ist das Funktionstestpotential STP ein Fehler-Funktionstestpotential und die Schutzleiter-Überwachungseinrichtung 100 ist ferner ausgebildet, im Funktionstestmodus in einer ersten Testphase das Fehler-Funktionstestpotential an dem ersten Eingang 25 bereitzustellen und in einer zweiten Testphase ein Normal-Funktionstestpotential an dem ersten Eingang 25 bereitzustellen. Das Normal-Funktionstestpotential simuliert für die Detektionsschaltung 5 den Fall, dass keine Schutzleiterstörung vorliegt, so dass das Detektionssignal DS in der zweiten Funktionstestphase die Schutzleiterstörung nicht anzeigt. Auf diese Weise kann getestet werden, ob die Schutzleiter-Überwachungseinrichtung 100 auch in der Lage ist, den Fall korrekt zu erkennen, dass keine Schutzleiterstörung vorliegt.

Gemäß einer weiteren möglichen Ausgestaltung ist die Schutzleiter-Überwachungseinrichtung 100 ausgebildet, automatisch in den Funktionstestmodus zu wechseln. Beispielsweise umfasst die Schutzleiter-Überwachungseinrichtung 100 eine (in den Figuren nicht gezeigte) Steuereinheit, beispielsweise einen Microcontroller, die ausgebildet ist, (beispielsweise gemäß einem auf der Steuereinheit hinterlegten Programm) automatisch die Schutzleiter-Überwachungseinrichtung 100 in den Funktionstestmodus zu versetzen, beispielsweise durch Ansteuerung des Funktionstest-Schalters 34.

Unter Bezugnahme auf die Figuren 2 und 3 soll nachstehend näher auf einen exemplarischen Aufbau der Schutzleiter-Überwachungseinrichtung 100, 300 eingegangen werden.

Die Schutzleiter-Überwachungseinrichtung 100 verfügt exemplarisch über eine erste Schaltungsanordnung 12, die ausgebildet ist, im Prüfmodus das Messpotential MP bereitzustellen. Das elektrische Messpotential MP hängt von dem elektrischen Potential AP des ersten Anschlusspunkts 3 ab.

Die Schutzleiter-Überwachungseinrichtung 100 verfügt exemplarisch ferner über eine zweite Schaltungsanordnung 13, die ausgebildet ist, im Prüfmodus und/oder Funktionstestmodus ein erstes elektrisches Vergleichspotenzial VP1 bereitzustellen. Das von der zweiten Schaltungsanordnung 13 bereitgestellte erste Vergleichspotential VP1 dient (im Prüfmodus und/oder Funktionstestmodus) vorzugsweise als das elektrische Vergleichspotential VP.

Die Detektionsschaltung 5 umfasst exemplarisch die Komparatoreinrichtung, die zweckmäßigerweise die Differenzverstärkerschaltung 43 aufweist. Die Detektionsschaltung 5 ist ausgebildet, im Prüfmodus ein Detektionssignal DS gemäß einem Vergleich des Messpotentials MP mit dem ersten Vergleichspotential VP1 bereitzustellen. Die Detektionsschaltung 5 ist ferner ausgebildet, im Funktionstestmodus das Detektionssignal DS gemäß einem Vergleich des Funktionstestpotentials STP mit dem ersten Vergleichspotential VP1 bereitzustellen. Das Detektionssignal DS kann auch als Komparatorsignal KS bezeichnet werden.

Die Schutzleiter-Überwachungseinrichtung 100 verfügt über die elektrisch leitende Berührungsfläche 20 zur Berührung durch einen Benutzer. Die Berührungsfläche 20 ist für den Benutzer zugänglich an der Schutzleiter-Überwachungseinrichtung 100 angeordnet. Die zweite Schaltungsanordnung 13 ist ausgebildet, das erste Vergleichspotential VP1 in Abhängigkeit von dem an der Berührungsfläche 20 anliegenden elektrischen Potential BP bereitzustellen.

Mit einer derart ausgebildeten Schutzleiter-Überwachungseinrichtung 100 wird es möglich, eine Schutzleiterstörung zu erkennen, bei der auf dem Schutzleiter 4 ein Fremdpotential vorhanden ist, da sich das Messpotential MP in diesem Fall relativ zu dem ersten Vergleichspotential VP1 anders verhält, als wenn auf dem Schutzleiter 4 kein Fremdpotential vorhanden ist.

Die elektrisch leitende Berührungsfläche 20 ist exemplarisch außen an der Schutzleiter-Überwachungseinrichtung 100, insbesondere außen an der Stromverteilervorrichtung 1, angeordnet, so dass sie einem Benutzer zugänglich ist und beispielsweise mit einem Finger des Benutzers berührt werden kann. Exemplarisch verfügt die Stromverteilervorrichtung 1 und/oder die Schutzleiter-Überwachungseinrichtung 100 über das Gehäuse 38. Außen am Gehäuse 38 ist insbesondere die Berührungsfläche 20 vorgesehen.

Exemplarisch verfügt die Schutzleiter-Überwachungseinrichtung 100 ferner über eine Gleichrichteranordnung 11, die ausgebildet ist, eine zwischen dem zweiten Anschlusspunkt 7 und dem dritten Anschlusspunkt 9 anliegende Wechselspannung in eine gleichgerichtete Spannung zu wandeln. Die Gleichrichteranordnung 11 verfügt über zwei Ausgangsanschlusspunkte 14, 15, zwischen denen die Gleichrichteranordnung 11 die gleichgerichtete Spannung bereitstellt.

In der Figur 3 ist eine beispielhafte Schaltungsimplementierung der Gleichrichteranordnung 11 gezeigt, bei der die Gleichrichteranordnung 11 exemplarisch eine Gleichrichterbrücke aufweist. Die Gleichrichterbrücke umfasst exemplarisch vier Dioden. Die Verwendung der Gleichrichteranordnung 11 ist von Vorteil, da es dadurch für die Funktionalität der Schutzleiter-Überwachungseinrichtung 100, 300 keine Rolle spielt, mit welcher Polarität der Phasenleiter 8 und der Neutralleiter 10 an den zweiten und den dritten Anschlusspunkt 7, 9 angeschlossen werden. Insbesondere funktioniert die beschriebene Schutzleiter-Überwachungseinrichtung 100, 300 selbst dann, wenn der Phasenleiter 8 und der Neutralleiter 10 vertauscht werden - also wenn der Phasenleiter 8 an den dritten Anschlusspunkt 9 und der Neutralleiter 10 an den zweiten Anschlusspunkt 7 angeschlossen wird. Dies ist insbesondere von Vorteil bei ortsveränderlichen Stromverteilervorrichtungen 1, da bei diesen in der Regel nicht festgelegt ist, mit welcher Polarität die externe elektrische Leitung 2 anzuschließen ist.

Die Komparatoreinrichtung 16 wird exemplarisch aus der gleichgerichteten Spannung gespeist. Die gleichgerichtete Spannung kann dabei die Form einer pulsierenden Spannung, insbesondere einer pulsierenden Gleichspannung haben. Eine solche Speisung der Komparatoreinrichtung 16 aus der gleichgerichteten Spannung ist vorteilhaft, da dadurch für die Komparatoreinrichtung 16 keine eigene Spannungsquelle erforderlich ist. Ferner ist so auch kein Glättungskondensator zwischen den Ausgangsanschlüssen 14, 15 der Gleichrichteranordnung 11 erforderlich.

Wie vorstehend bereits erwähnt, umfasst die Schutzleiter-Überwachungseinrichtung 100 zweckmäßigerweise die Funktionstest-Schaltungsanordnung 42, die ausgebildet ist, das Zuführpotential ZP bereitzustellen, auf dessen Basis das Funktionstestpotential STP am ersten Eingang 25 bereitgestellt wird.

Die Funktionstest-Schaltungsanordnung 42 ist exemplarisch zwischen den zweiten Anschlusspunkt 7 und den dritten Anschlusspunkt 9 geschaltet. Wie in der Figur 3 gezeigt, kann die Funktionstest-Schaltungsanordnung 42 exemplarisch als Spannungsteiler ausgeführt sein. Die Funktionstest-Schaltungsanordnung 42 umfasst exemplarisch die als Spannungsteiler geschalteten Widerstände R17 und R18. Das Zuführpotential ZP wird exemplarisch zwischen den beiden Widerständen R17 und R18 bereitgestellt.

Exemplarisch ist die Funktionstest-Schaltungsanordnung 42 im Funktionstestmodus über den Funktionstest-Schalter 34 mit dem ersten Eingang 25 elektrisch verbunden. Die elektrische Verbindung erfolgt vorzugsweise über die erste Schaltungsanordnung 12. Ferner ist die Funktionstest-Schaltungsanordnung 42 im Prüfmodus zweckmäßigerweise von dem ersten Eingang 25 elektrisch getrennt.

Gemäß einer weiteren Ausgestaltung wird das Funktionstestpotential STP und/oder das Zuführpotential ZP zweckmäßigerweise auf eine andere Art und Weise erzeugt. Beispielsweise könnte als das Zuführpotential ZP auch direkt das auf dem Phasenleiter 8 vorhandene Potential verwendet werden. Ferner könnte das Zuführpotential ZP auch hochohmig geschaltet sein; z.B. indem eine Leitungsunterbrechung bereitgestellt wird.

Wie in der Figur 2 gezeigt, ist die erste Schaltungsanordnung 12 im Prüfmodus exemplarisch zwischen dem ersten Ausgangsanschlusspunkt 14 der Gleichrichteranordnung 11 und dem ersten Anschlusspunkt 3 geschaltet. Zweckmäßigerweise ist die erste Schaltungsanordnung 12 ausgebildet, im Prüfmodus das Messpotential MP basierend auf einer Spannung bereitzustellen, die zwischen dem ersten Ausgangsanschlusspunkt 14 der Gleichrichteranordnung 11 und dem ersten Anschlusspunkt 3 oder einem mit dem ersten Anschlusspunkt 3 elektrisch verbundenen Knoten 3a anliegt. Im Prüfmodus ist der Knoten 3a insbesondere galvanisch mit dem ersten Anschlusspunkt 3 verbunden, beispielsweise über eine elektrische Leitung.

Ferner ist die erste Schaltungsanordnung 12 zweckmäßigerweise ausgebildet, im Funktionstestmodus das Funktionstestpotential STP basierend auf einer Spannung bereitzustellen, die zwischen dem ersten Ausgangsanschlusspunkt 14 der Gleichrichteranordnung 11 und dem Zuführpotential ZP anliegt.

Gemäß der beschriebenen Ausgestaltung kann das Messpotential MP und/oder das Funktionstestpotential STP folglich direkt mit Hilfe eines an dem Ausgangsanschlusspunkt 14 der Gleichrichteranordnung 11 anliegenden elektrischen Potentials generiert werden. Bei dem Ausgangsanschlusspunkt 14 handelt es sich insbesondere um den positiven oder oberen Anschluss des Ausgangs der Gleichrichteranordnung 11.

In diesem Zusammenhang sei erwähnt, dass das Messpotential MP und/oder das Funktionstestpotential STP zweckmäßigerweise kein festes Potential ist. Insbesondere dann, wenn die Gleichrichteranordnung 11 eine pulsierende Spannung, insbesondere eine pulsierende Gleichspannung, ausgibt und das Messpotential MP und/oder das Funktionstestpotential auf Basis der pulsierenden Spannung, insbesondere der pulsierenden Gleichspannung, erzeugt wird, kann auch das Messpotential MP und/oder das Funktionstestpotential als pulsierendes Signal vorliegen.

Vorzugsweise verfügt die erste Schaltungsanordnung 12 über einen ersten Spannungsteiler mit wenigstens zwei Widerständen. Die Figur 3 zeigt eine exemplarische Schaltungsimplementierung der ersten Schaltungsanordnung 12. Hier umfasst die erste Schaltungsanordnung 12 zwei in Reihe zwischen den ersten Ausgangsanschlusspunkt 14 und den Knoten 3a geschaltete Widerstände R1, R2, die zusammen den ersten Spannungsteiler bilden. Zwischen den Widerständen R1, R2 wird das Messpotential MP und/oder das Funktionstestpotential STP bereitgestellt.

Wie in der Figur 3 gezeigt, kann die erste Schaltungsanordnung 12 ferner eine Diode D1 umfassen, die in Reihe zu dem ersten Spannungsteiler geschaltet ist. Die Diode D1 ist vorzugsweise vom selben Typ wie die Dioden der Gleichrichteranordnung 11 und soll einen durch die Gleichrichteranordnung 11 verursachten Spannungsabfall nachbilden, um zu verhindern, dass der durch die Gleichrichteranordnung 11 verursachte Spannungsabfall das Vergleichsergebnis der Komparatoreinrichtung 16 beeinflusst.

Wie in der Figur 2 gezeigt, ist die zweite Schaltungsanordnung 13 exemplarisch zwischen den ersten Ausgangsanschlusspunkt 14 und die Berührungsfläche 20 geschaltet. Zweckmäßigerweise ist die zweite Schaltungsanordnung 13 ausgebildet, das erste Vergleichspotential VP1 basierend auf einer Spannung bereitzustellen, die zwischen dem ersten Ausgangsanschlusspunkt 14 und der Berührungsfläche 20 anliegt.

Insbesondere dann, wenn die Gleichrichteranordnung 11 eine pulsierende Spannung, insbesondere eine pulsierende Gleichspannung ausgibt, und das erste Vergleichspotential VP1 auf Basis der pulsierenden Spannung, insbesondere der pulsierenden Gleichspannung, erzeugt wird, kann auch das erste Vergleichspotential VP1 als pulsierendes Signal vorliegen.

Vorzugsweise verfügt die zweite Schaltungsanordnung 13 über einen zweiten Spannungsteiler mit wenigstens zwei Widerständen. Die Figur 3 zeigt eine exemplarische Schaltungsimplementierung der zweiten Schaltungsanordnung 13. Hier umfasst die zweite Schaltungsanordnung 13 vier in Reihe zwischen den ersten Ausgangsanschlusspunkt 14 und der Berührungsfläche 20 geschaltete Widerstände R3, R4, R5, R6, die zusammen den zweiten Spannungsteiler bilden. Zwischen den Widerständen R4, R5 wird das erste Vergleichspotential VP1 bereitgestellt.

Die Schutzleiter-Überwachungseinrichtung 100 ist grundsätzlich so ausgebildet, dass mithilfe des bereitgestellten Komparatorsignals KS wenigstens zwei verschiedene Zustände - insbesondere ein Normalzustand und ein Fehlerzustand - unterschieden werden können. Der Normalzustand wird hier auch als erster Zustand und der Fehlerzustand als zweiter Zustand bezeichnet. Die Schutzleiter-Überwachungseinrichtung 100 ist dementsprechend ausgebildet, das Komparatorsignal KS in Abhängigkeit davon bereitzustellen, ob der erste Zustand oder der zweite Zustand vorliegt; d.h. das Komparatorsignal KS - also der Signalwert und/oder Signalverlauf des Komparatorsignals - ist abhängig davon, welcher Zustand vorliegt.

Der erste Zustand - also der Normalzustand - umfasst insbesondere einen Zustand, bei dem die Berührungsfläche 20 mit dem Körper des Benutzers in elektrisch leitender Verbindung steht und auf dem Schutzleiter 4 kein Fremdpotential vorhanden ist.

Der zweite Zustand - also der Fehlerzustand - umfasst zweckmäßigerweise mehrere Zustände, insbesondere einen Zustand, dass die Berührungsfläche 20 nicht von einem Benutzer berührt wird, einen Zustand, dass die Berührungsfläche 20 mit elektrisch isolierendem Material berührt wird und/oder einen Zustand, dass auf dem Schutzleiter 4 eine Fremdspannung vorhanden ist. Der zweite Zustand ist insbesondere auch dann gegeben, wenn der Benutzer die Berührungsfläche 20 mit einem elektrisch isolierenden Handschuh berührt.

Zweckmäßigerweise sind die Schaltungsanordnungen 12, 13 derart ausgebildet, dass sich in dem ersten Zustand eine erste Beziehung zwischen dem Messpotential MP und dem ersten Vergleichspotential VP1 einstellt - beispielsweise, dass das Vergleichspotential VP1 kleiner ist als das Messpotential MP - und dass sich in dem zweiten Zustand eine zweite Beziehung zwischen dem Messpotential MP und dem ersten Vergleichspotential VP1 einstellt - beispielsweise, dass das Vergleichspotential VP1 größer ist als das Messpotential MP.

Zweckmäßigerweise sind die Schaltungsanordnungen 12, 13 derart ausgebildet, dass in dem Fall, in dem an der Berührungsfläche 20 und dem ersten Anschlusspunkt 3 in etwa dasselbe Potential anliegt, das Vergleichspotential VP1 kleiner ist als das Messpotential MP. Sofern die Schaltungsanordnungen 12, 13 Spannungsteiler umfassen, kann dies beispielsweise dadurch erzielt werden, dass der zweite Spannungsteiler (der zweiten Schaltungsanordnung 13) ein kleineres Teilerverhältnis als der erste Spannungsteiler (der ersten Schaltungsanordnung 12) aufweist.

Ferner sind die Schaltungsanordnungen 12, 13 zweckmäßigerweise derart ausgebildet, dass dann, wenn die Berührungsfläche 20 mit einem isolierenden Gegenstand - z.B. hochohmig - oder nicht berührt wird und/oder wenn ein Fremdpotential, insbesondere ein von einem Phasenleiter stammendes Fremdpotential, auf dem Schutzleiter 4 bzw. dem ersten Anschlusspunkt 3 vorhanden ist, das Vergleichspotential VP1 größer ist als das Messpotential MP.

Die Komparatoreinrichtung 16 ist zwischen die beiden Ausgangsanschlusspunkte 14, 15 der Gleichrichteranordnung 11 geschaltet und wird zweckmäßigerweise von einer pulsierenden gleichgerichteten Spannung, insbesondere einer pulsierenden Gleichspannung, versorgt. Die Komparatoreinrichtung 16 verfügt, wie vorstehend bereits erwähnt, über die Differenzverstärkerschaltung 43. Der Vergleich zwischen dem Messpotential MP oder dem Funktionstestpotential STP und dem ersten Vergleichspotential VP1 findet mittels der Differenzverstärkerschaltung 43 statt. Die Komparatoreinrichtung 16 verfügt über den ersten Eingang 25, an dem das Messpotential MP oder das Funktionstestpotential STP anliegt, und den zweiten Eingang 26, an dem das erste Vergleichspotential VP1 anliegt.

Die Differenzverstärkerschaltung 43 kann einen Differenzverstärker mit bekannter Topologie aufweisen. Beispielsweise kann die Differenzverstärkerschaltung 43 einen Differenzverstärker mit zwei gleichartigen Transistoren als Eingänge, einem Emitterwiderstand, einem Stromspiegel und/oder Lastwiderständen aufweisen. Die Figur 3 zeigt eine exemplarische Ausgestaltung einer Differenzverstärkerschaltung 43. Hier verfügt der Differenzverstärker über einen Transistor T1, der den ersten Eingang 25 bereitstellt, und einen Transistor T2, der den zweiten Eingang 26 bereitstellt. Ferner verfügt der Differenzverstärker über einen Emitterwiderstand R10 sowie zwei Transistoren T5, T6, die zusammen einen Stromspiegel bilden.

Gemäß einer (in den Figuren nicht gezeigten) alternativen Ausgestaltung umfasst der Differenzverstärker anstelle des Stromspiegels - also anstelle der beiden Transistoren T5, T6 - zwei Lastwiderstände.

Der Differenzverstärker ist zwischen die beiden Ausgangsanschlusspunkte 14, 15 der Gleichrichteranordnung 11 geschaltet. Rein exemplarisch verfügt der Differenzverstärker ferner über einen Transistor T3, der zusammen mit dem Transistor T2 eine Darlington-Schaltung bildet.

Vorzugsweise sind die Transistoren des Differenzverstärkers Bipolartransistoren. Insbesondere sind die Transistoren des Differenzverstärkers als Hochvolttransistoren ausgebildet. Die Transistoren T1, T2, T3 sind vorzugsweise als PNP-Transistoren ausgebildet und die Transistoren T5, T6 als NPN-Transistoren.

Gemäß einer (in den Figuren nicht gezeigten) alternativen Ausgestaltung ist die Differenzverstärkerschaltung gespiegelt zu der gezeigten Differenzverstärkerschaltung 43 ausgeführt. Insbesondere sind anstelle der PNP-Transistoren (beispielsweise der Transistoren T1, T2, T3) NPN-Transistoren vorhanden und anstelle der NPN Transistoren (beispielsweise der Transistoren T5, T6) PNP-Transistoren vorhanden.

Gemäß einer weiteren (in den Figuren nicht gezeigten) alternativen Ausgestaltung sind die Transistoren des Differenzverstärkers Feldeffekt-Transistoren, insbesondere Metall-Oxid-Halbleiter-Feldeffekttransistoren.

Durch die Verwendung einer Differenzverstärkerschaltung wird die Erkennung der Schutzleiterstörung über einen differentiellen Vergleich zweier Potentiale bzw. Eingangsspannungen erzielt. Der differentielle Vergleich hat den Vorteil, dass Störgrößen, wie z.B. Temperatur- oder Prozessschwankungen, unterdrückt werden können.

Vorzugsweise verfügt die Komparatoreinrichtung 16 über eine Inverterstufe, die das Komparatorsignals KS durchläuft. Exemplarisch verfügt die Komparatoreinrichtung 16 über eine Emitterschaltung 39, die vorzugsweise von der gleichgerichteten Spannung der Gleichrichteranordnung 11 versorgt wird und deren Eingang mit dem (in Hinblick auf den ersten Eingang 25) invertierenden Ausgang des Differenzverstärkers verbunden ist. Am Ausgang der Emitterschaltung 39 wird das Komparatorsignal KS bereitgestellt. In der Figur 3 ist eine exemplarische Schaltungsimplementierung der Emitterschaltung 39 gezeigt, bei der ein Widerstand R11 und ein exemplarisch als NPN-Transistor ausgebildeter Transistor T7 in Reihe zwischen die Ausgangsanschlusspunkte 14, 15 der Gleichrichteranordnung 11 geschaltet sind. Die Emitterschaltung 39 stellt insbesondere die vorgenannte Inverterstufe dar, die das Komparatorsignal KS durchläuft. Anstelle der Emitterschaltung kann auch eine andere Inverterstufe vorhanden sein. Ferner kann die Inverterstufe, insbesondere die Emitterschaltung 39, auch weggelassen werden. In diesem Fall kann das Komparatorsignal KS beispielsweise an einem Ausgang der Differenzverstärkerschaltung 43 bereitgestellt werden.

Ferner kann das Komparatorsignal KS einem Microcontroller zugeführt werden, der zweckmäßigerweise die Funktion der Schalteinrichtung 17 ganz oder teilweise erfüllt und insbesondere eine Ansteuerung des Schutzschalters 35 gemäß dem Komparatorsignal KS bewirkt. Beispielsweise kann das Speicherglied 36 durch den Microcontroller realisiert sein.

Die Schutzleiter-Überwachungseinrichtung 100, 300 umfasst exemplarisch den Schutzschalter 35 zur Unterbrechung der mit dem ersten Anschlusspunkt 3, zweiten Anschlusspunkt 7 und dritten Anschlusspunkt 9 verbundenen internen elektrischen Leitung 37. Zweckmäßigerweise ist die Schutzleiter-Überwachungseinrichtung 100, 300 ausgebildet, in Ansprechen auf das Komparatorsignal KS die interne elektrische Leitung 37 mit Hilfe des Schutzschalters 35 zu unterbrechen. Vorzugsweise ist die Stromverteilervorrichtung 1 ausgebildet, die interne elektrische Leitung 37 in Ansprechen auf einen ersten Komparatorsignal-Zustand nicht zu unterbrechen und die interne elektrische Leitung 37 in Ansprechen auf einen zweiten Komparatorsignal-Zustand zu unterbrechen.

Zweckmäßigerweise ist der Schutzschalter 35 ausgebildet, einen Unterbrechungs-Zustand, in dem der Schutzschalter 35 die interne elektrische Leitung 37 unterbricht, beizubehalten, insbesondere zu speichern, zweckmäßigerweise wenigstens solange, bis die Betätigungseinrichtung 29 (erneut) betätigt wird. Die Ansteuerung des Schutzschalters 35 kann zweckmäßigerweise auch durch einen Microcontroller realisiert sein.

Die Ansteuerung des Schutzschalters 35 erfolgt exemplarisch über eine Schalteinrichtung 17.

In der Figur 3 ist eine exemplarische Schaltungsimplementierung der Schalteinrichtung 17 gezeigt. Die Schalteinrichtung 17 verfügt hier über einen Optokoppler, der von der Leuchtdiode D2 und der Photodiode D3 gebildet wird. Die Leuchtdiode D2 ist exemplarisch zwischen den ersten Ausgangsanschlusspunkt 14 und das Komparatorsignal KS oder den Ausgang der Komparatoreinrichtung 16 geschaltet. Der Optokoppler ist ausgebildet, den Schutzschalter 35 anzusteuern, um zu bewirken, dass die interne elektrische Leitung 37 wahlweise unterbrochen oder nicht unterbrochen wird.

Exemplarisch wird die interne elektrische Leitung 37 in Ansprechen darauf unterbrochen, dass das Messpotential MP (oder das Funktionstestpotential STP) kleiner als das erste Vergleichspotential VP1 ist. In diesem Fall nimmt das Komparatorsignal KS einen niedrigen Pegel bzw. einen L-Pegel an, so dass ein Strom durch die Leuchtdiode D2 fließt und die Photodiode D3 angeregt wird bzw. ein Signal bereitstellt, das wiederum bewirkt, dass der Schutzschalter 35 die interne elektrische Leitung 37 unterbricht.

Es sei angemerkt, dass die Kopplung zwischen dem Schutzschalter 35 und dem Komparatorsignal KS alternativ auch ohne Optokoppler ausgeführt sein kann.

Vorzugsweise verfügt die Schutzleiter-Überwachungseinrichtung 100, 300, insbesondere die Stromverteilervorrichtung 1, über eine Betätigungseinrichtung 29, insbesondere eine Taste und/oder einen Schalter, an der zweckmäßigerweise die Berührungsfläche 20 angeordnet ist.

Die Schutzleiter-Überwachungseinrichtung 100, 300, insbesondere die Stromverteilervorrichtung 1, ist insbesondere derart ausgebildet, dass die Betätigungseinrichtung 29 zwingend betätigt werden muss, damit mit der Stromverteilervorrichtung 1 eine Netzspannung bereitgestellt werden kann. Beispielsweise kann die Schutzleiter-Überwachungseinrichtung 100, 300 ausgebildet sein, die interne elektrische Leitung 37 zu unterbrechen, bis die Betätigungseinrichtung 29 wenigstens einmal betätigt wurde. Dadurch, dass die Betätigungseinrichtung 29 zur Inbetriebnahme der Stromverteilervorrichtung 1 betätigt werden muss und dass die Berührungsfläche 20 auf der Betätigungseinrichtung 29 angeordnet ist, kann sichergestellt werden, dass der Benutzer die Berührungsfläche 20 bei der Inbetriebnahme wenigstens einmal berühren muss, so dass das erste Vergleichspotential VP1 erzeugt werden kann und eine Prüfung dahingehend stattfinden kann, ob der Fehlerzustand gegeben ist, also ob beispielsweise auf dem Schutzleiter 4 ein Fremdpotential vorhanden ist.

Gemäß einem möglichen Verfahren zum Betrieb der Schutzleiter-Überwachungseinrichtung 100, 300 betätigt der Benutzer zunächst die Betätigungseinrichtung 29 und berührt die Berührungsfläche 20, so dass das erste Vergleichspotential VP1 erzeugt wird. Die Schutzleiter-Überwachungseinrichtung 100, 300 befindet sich im Prüfmodus und prüft auf Basis des Messpotentials MP und des ersten Vergleichspotentials VP1, ob eine Schutzleiterstörung vorliegt. Die Schutzleiter-Überwachungseinrichtung 100, 300 gibt ein Detektionssignal DS aus, das anzeigt, dass keine Schutzleiterstörung vorliegt. Zweckmäßigerweise wird der Schutzschalter 35 gemäß dem Detektionssignal DS geschlossen, so dass die interne Leitung 37 nicht unterbrochen ist. Während der Benutzer weiterhin die Berührungsfläche 20 betätigt, wird die Schutzleiter-Überwachungseinrichtung 100, 300 in den Funktionstestmodus versetzt, beispielsweise durch Benutzerbetätigung, insbesondere durch Benutzerbetätigung der Funktionstest-Betätigungseinrichtung 41. Die Schutzleiter-Überwachungseinrichtung 100, 300 führt nun auf Basis des Funktionstestpotentials STP und des ersten Vergleichspotentials VP1 den Funktionstest durch. Das Funktionstestpotential STP simuliert das bei Vorliegen einer Schutzleiterstörung an dem ersten Eingang 25 anliegende Messpotential. Dementsprechend wird ein Detektionssignal DS ausgegeben, das eine Schutzleiterstörung anzeigt. Zweckmäßigerweise wird der Schutzschalter 35 gemäß dem Detektionssignal DS geöffnet, so dass die interne Leitung 37 unterbrochen wird. Zweckmäßigerweise wird durch die Unterbrechung der internen Leitung 37 die Stromzufuhr an einen an die interne Leitung 37 angeschlossenen Verbraucher unterbrochen. Exemplarisch kann der Benutzer aus der unterbrochenen Stromzufuhr darauf schließen, dass die Schutzleiterüberwachung funktioniert.

Bei dem vorstehend erwähnten Prüfmodus handelt es sich insbesondere um einen ersten Prüfmodus. Der erste Prüfmodus dient dazu, eine erste Schutzleiterstörung zu detektieren, bei der auf dem Schutzleiter 4 ein Fremdpotential vorhanden ist. Exemplarisch erfolgt im ersten Prüfmodus ein Vergleich des Messpotentials MP mit dem ersten Vergleichspotential VP1. Der vorstehend erläuterte Funktionstestmodus, der prüft, ob die erste Schutzleiterstörung erkannt werden kann, soll auch als erster Funktionstestmodus bezeichnet werden. Der im ersten Funktionstestmodus durchgeführte Funktionstest soll als erster Funktionstest bezeichnet werden.

Gemäß einer möglichen Ausgestaltung kann der Prüfmodus auch einen zweiten Prüfmodus umfassen (alternativ oder zusätzlich zu dem ersten Prüfmodus). Der zweite Prüfmodus dient dazu, eine zweite Schutzleiterstörung zu detektieren, bei der der Schutzleiter 4 unterbrochen ist. Wie nachfolgend erläutert, erfolgt im zweiten Prüfmodus ein Vergleich des Messpotentials MP mit einem zweiten Vergleichspotential VP2. Gemäß einer möglichen Ausgestaltung kann der Funktionstestmodus prüfen, ob die zweite Schutzleiterstörung erkannt werden kann. Ein solcher Funktionstestmodus soll auch als zweiter Funktionstestmodus bezeichnet werden.

Zweckmäßigerweise wird im zweiten Prüfmodus und/oder im zweiten Funktionstestmodus das zweite Vergleichspotential VP2 als das Vergleichspotential VP verwendet. Ferner wird im zweiten Funktionstestmodus zweckmäßigerweise als das Funktionstestpotential das vorstehend erläuterte Funktionstestpotential STP - also insbesondere das gleiche Funktionstestpotential STP wie im ersten Funktionstestmodus - verwendet.

Gemäß einer alternativen Ausgestaltung wird im zweiten Funktionstestmodus ein zweites Funktionstestpotential verwendet, das (im zweiten Prüfmodus) dem bei einer Unterbrechung des Schutzleiters 4 am ersten Eingang 25 anliegenden Potential entspricht. Zur Bereitstellung eines solchen zweiten Funktionstestpotentials kann beispielsweise die elektrische Verbindung zwischen dem Konten 3A und dem ersten Anschlusspunkt 3 getrennt werden, ohne dass der Knoten 3A mit einem anderen Leiter verbunden wird.

Zweckmäßigerweise dient die Funktionstest-Betätigungseinrichtung 41 dazu, um die Schutzleiter-Überwachungseinrichtung 100, 300 mittels Benutzerbetätigung in den zweiten Funktionstestmodus zu versetzen.

Für die Umschaltung zwischen den beiden Prüfmodi ist zweckmäßigerweise eine Betätigungseinrichtung vorgesehen, beispielsweise die vorstehend bereits diskutierte Betätigungseinrichtung 29. Exemplarisch ist an der Betätigungseinrichtung die Berührungsfläche 20 angeordnet. Die Betätigungseinrichtung 29 dient also zweckmäßigerweise dazu, zwischen den beiden Prüfmodi umzuschalten. Beispielsweise wird durch Betätigen, insbesondere Drücken, der Betätigungseinrichtung 29 in den ersten Prüfmodus umgeschaltet und durch Nicht-Betätigen der Betätigungseinrichtung 29 wird in den zweiten Prüfmodus umgeschaltet.

Gemäß einem möglichen Verfahren zum Betrieb der Schutzleiter-Überwachungseinrichtung 300 betätigt der Benutzer zunächst die Betätigungseinrichtung 29 und berührt die Berührungsfläche 20, so dass das erste Vergleichspotential VP1 erzeugt wird. Die Schutzleiter-Überwachungseinrichtung 300 befindet sich im ersten Prüfmodus und prüft auf Basis des Messpotentials MP und des ersten Vergleichspotentials VP1, ob die erste Schutzleiterstörung vorliegt. Die Schutzleiter-Überwachungseinrichtung 300 gibt ein Detektionssignal DS aus, das anzeigt, dass keine Schutzleiterstörung vorliegt. Zweckmäßigerweise wird der Schutzschalter 35 gemäß dem Detektionssignal DS geschlossen, so dass die interne Leitung 37 nicht unterbrochen ist. Vorzugsweise wird der Schutzschalter 35 gemäß dem Detektionssignal DS beim Loslassen der Betätigungseinrichtung 29 geschlossen, sofern keine Schutzleiterstörung vorlag, so dass die interne Leitung 37 nicht unterbrochen ist. Während der Benutzer weiterhin die Berührungsfläche 20 betätigt, wird die Schutzleiter-Überwachungseinrichtung 300 in den ersten Funktionstestmodus versetzt, beispielsweise durch Benutzerbetätigung, insbesondere durch Benutzerbetätigung der Funktionstest-Betätigungseinrichtung 41. Die Schutzleiter-Überwachungseinrichtung 300 führt nun auf Basis des Funktionstestpotentials STP und des ersten Vergleichspotentials VP1 den ersten Funktionstest durch. Das Funktionstestpotential STP simuliert ein bei Vorliegen einer Schutzleiterstörung an dem ersten Eingang 25 anliegende Messpotential. Dementsprechend wird ein Detektionssignal DS ausgegeben, das eine Schutzleiterstörung anzeigt. Zweckmäßigerweise wird der Schutzschalter 35 insbesondere beim Loslassen der Betätigungseinrichtung 29, gemäß dem Detektionssignal DS geöffnet, so dass die interne Leitung 37 unterbrochen wird. Der Benutzer erkennt die unterbrochene interne Leitung 37 beispielsweise daran, dass die Stromzufuhr an einen an die interne Leitung 37 angeschlossenen Verbraucher unterbrochen wird. Der Benutzer kann aus der unterbrochenen internen Leitung 37 darauf schließen, dass die Schutzleiter-Überwachungseinrichtung 300 insoweit funktioniert, dass sie die erste Schutzleiterstörung erkennen kann.

Mittels der Betätigungseinrichtung 29 versetzt der Benutzer die Schutzleiter-Überwachungseinrichtung 300 in den zweiten Prüfmodus, beispielsweise, indem der Benutzer die Betätigungseinrichtung 29 loslässt. Zweckmäßigerweise berührt der Benutzer die Berührungsfläche 20 nicht mehr. Die Schutzleiter-Überwachungseinrichtung 300 befindet sich im zweiten Prüfmodus und prüft auf Basis des Messpotentials MP und des zweiten Vergleichspotentials VP2, ob die zweite Schutzleiterstörung vorliegt. Die Schutzleiter-Überwachungseinrichtung 300 gibt ein Detektionssignal DS aus, das anzeigt, dass keine Schutzleiterstörung vorliegt. Zweckmäßigerweise wird der Schutzschalter 35 gemäß dem Detektionssignal DS geschlossen, so dass die interne Leitung 37 nicht unterbrochen ist. Die Schutzleiter-Überwachungseinrichtung 300 wird in den zweiten Funktionstestmodus versetzt, beispielsweise durch Benutzerbetätigung, insbesondere durch Benutzerbetätigung der Funktionstest-Betätigungseinrichtung 41. Die Schutzleiter-Überwachungseinrichtung 300 führt nun auf Basis des Funktionstestpotentials STP und des zweiten Vergleichspotentials VP2 den zweiten Funktionstest durch. Ein Detektionssignal DS wird ausgegeben, das eine Schutzleiterstörung anzeigt. Zweckmäßigerweise wird der Schutzschalter 35 gemäß dem Detektionssignal DS geöffnet, so dass die interne Leitung 37 unterbrochen wird. Der Benutzer erkennt die unterbrochene interne Leitung 37 beispielsweise daran, dass die Stromzufuhr an einen an die interne Leitung 37 angeschlossenen Verbraucher unterbrochen wird. Der Benutzer kann aus der unterbrochenen internen Leitung 37 darauf schließen, dass die Schutzleiterüberwachung insoweit funktioniert, dass sie die zweite Schutzleiterstörung erkennen kann.

Unter Bezugnahme auf die Figur 3 soll nachstehend eine exemplarische Schaltungsimplementierung zur Bereitstellung des zweiten Prüfmodus und/oder des zweiten Funktionstestmodus erläutert werden.

Die Schutzleiter-Überwachungseinrichtung 300 verfügt exemplarisch über eine dritte Schaltungsanordnung 18, die ausgebildet ist, das zweite elektrische Vergleichspotential VP2 bereitzustellen. Zweckmäßigerweise ist die Komparatoreinrichtung 16 ausgebildet, das Komparatorsignal KS basierend auf einem Vergleich des elektrischen Messpotentials MP oder des Funktionstestpotentials STP mit dem zweiten elektrischen Vergleichspotential VP2 bereitzustellen.

Wie in der Figur 3 gezeigt, ist die dritte Schaltungsanordnung 18 exemplarisch zwischen dem ersten Ausgangsanschlusspunkt 14 und dem zweiten Ausgangsanschlusspunkt 15 der Gleichrichteranordnung 11 geschaltet. Zweckmäßigerweise ist die dritte Schaltungsanordnung 18 ausgebildet, das zweite Vergleichspotential VP2 basierend auf einer Spannung bereitzustellen, die zwischen dem ersten Ausgangsanschlusspunkt 14 und dem zweiten Ausgangsanschlusspunkt 15 anliegt.

In diesem Zusammenhang sei erwähnt, dass das zweite Vergleichspotential VP2 zweckmäßigerweise kein festes Potential ist. Insbesondere dann, wenn die Gleichrichteranordnung 11 eine pulsierende Spannung, insbesondere eine pulsierende Gleichspannung, ausgibt und das zweite Vergleichspotential VP2 auf Basis der pulsierenden Spannung, insbesondere der pulsierenden Gleichspannung, erzeugt wird, kann auch das zweite Vergleichspotential VP2 als pulsierendes Signal vorliegen.

Vorzugsweise verfügt die dritte Schaltungsanordnung 18 über einen dritten Spannungsteiler mit wenigstens zwei Widerständen. Die Figur 3 zeigt eine exemplarische Schaltungsimplementierung der dritten Schaltungsanordnung 18. Hier umfasst die dritte Schaltungsanordnung 18 drei in Reihe zwischen den ersten Ausgangsanschlusspunkt 14 und den zweiten Ausgangsanschluss 15 geschaltete Widerstände R7, R8, R9, die zusammen den dritten Spannungsteiler bilden. Zwischen den Widerständen R7, R8 wird das zweite Vergleichspotential VP2 bereitgestellt.

Der Vergleich des Messpotentials MP mit dem zweiten Vergleichspotential VP2 dient insbesondere dazu, herauszufinden, ob der Schutzleiter 4 eine Schutzleiterstörung wie beispielsweise eine Unterbrechung aufweist. Im Falle einer Unterbrechung des Schutzleiters 4 ist (in einem Zustand, in dem der Schutzleiter 4 mit dem ersten Anschlusspunkt 3 verbunden ist) das Messpotential MP größer als wenn der Schutzleiter 4 keine Unterbrechung aufweist.

Zweckmäßigerweise ist die Schutzleiter-Überwachungseinrichtung 300 ausgebildet, das Komparatorsignal KS in Abhängigkeit davon bereitzustellen, ob der Schutzleiter 4 unterbrochen ist oder nicht, in einem Zustand, in dem der Schutzleiter 4 mit dem ersten Anschlusspunkt 3 verbunden ist. Die erste Schaltungsanordnung 12 und die dritte Schaltungsanordnung 18 sind zweckmäßigerweise derart ausgestaltet, dass das Messpotential MP dann, wenn der Schutzleiter 4 unterbrochen ist, größer als das zweite Vergleichspotential VP2 ist, und dann, wenn der Schutzleiter 4 nicht unterbrochen ist, kleiner ist als das zweite Vergleichspotential VP2.

Das Messpotential bildet dabei insbesondere den elektrischen Widerstand von dem ersten Anschlusspunkt 3 zu der Erdung des Schutzleiters 4 ab. Das heißt, das Messpotential verhält sich in Entsprechung zu dem Widerstand. Überschreitet das Messpotential MP das zweite elektrische Vergleichspotential VP2, so deutet dies darauf hin, dass der Widerstand auf dem Schutzleiter 4 größer ist als er sein sollte, und dass somit eine Schutzleiterstörung vorliegen kann.

Wie vorstehend bereits erläutert, sind die Schaltungsanordnungen 12 und 18 in der Figur 3 exemplarisch als Spannungsteiler ausgebildet. Vorzugsweise sind die Widerstände der Spannungsteiler so gewählt, dass ein Schwellenwert definiert wird, der zweckmäßigerweise dem maximal zulässigen Widerstand auf dem Schutzleiter 4 entspricht. Beispielsweise entspricht der Schwellenwert einem niederohmigen Widerstand (beispielsweise 1kOhm) auf dem Schutzleiter 4.

Zweckmäßigerweise verfügt die Schutzleiter-Überwachungseinrichtung 300 über ein insbesondere als Tiefpassglied ausgebildetes Speicherglied 36, das insbesondere dann, wenn das Messpotential MP mit dem zweiten Vergleichspotential VP2 verglichen wird, mit dem Ausgang der Komparatoreinrichtung 16 verbunden ist und das Komparatorsignal KS empfängt. Die Ansteuerung des Schutzschalters 35 erfolgt dann zweckmäßigerweise gemäß dem tiefpassgefilterten und insbesondere invertierten Komparatorsignal KS.

In der Figur 3 ist eine exemplarische Schaltungsimplementierung eines Speicherglieds 36 gezeigt. Exemplarisch umfasst das Speicherglied 36 einen Transistor T8, einen Widerstand R19 und einen Kondensator C1. Der Transistor T8 ist vorzugsweise als NPN-Transistor ausgebildet. Das Speicherglied 36, insbesondere der Kondensator C1, wird gemäß dem Komparatorsignal KS aufgeladen oder entladen. Gemäß dem Ladezustand des Speicherglieds 36 wird der Transistor T8 geschaltet. Ab einem gewissen Ladezustand des Speicherglieds 36 wird der Transistor T8 leitend und es erfolgt eine Ansteuerung des Schutzschalters 35, so dass die interne elektrische Leitung 37 unterbrochen wird. Exemplarisch fließt bei leitendem Transistor T8 ein Strom durch die Leuchtdiode D2, so dass die Photodiode D3 ein Signal bereitstellt, das die Ansteuerung des Schutzschalters 35 bewirkt.

Eine Tiefpassfilterung des Komparatorsignals KS ist insbesondere dann von Vorteil, wenn das Messpotential MP und das zweite Vergleichspotential VP2 von einer pulsierenden Spannung, insbesondere von einer pulsierenden Gleichspannung, abgeleitet werden, da in diesem Fall das Komparatorsignal KS aufgrund des transienten Verhaltens der Schaltung auch dann zeitweise kippen kann, wenn keine Schutzleiterstörung vorliegt. Durch die Verwendung des Speicherglieds 36 wird verhindert, dass dieses zeitweise Kippen zu einer Ansteuerung des Schutzschalters 35 führt.

Zweckmäßigerweise ist die Schutzleiter-Überwachungseinrichtung 300 ausgebildet, wahlweise den ersten Prüfmodus oder den zweiten Prüfmodus einzunehmen. In dem ersten Prüfmodus kann dabei ein Vergleich zwischen dem Messpotential MP und dem ersten Vergleichspotential VP1 erfolgen und in dem zweiten Prüfmodus ein Vergleich zwischen dem Messpotential MP und dem zweiten Vergleichspotential VP2. Dementsprechend ist die Komparatoreinrichtung 16 insbesondere ausgebildet, in dem ersten Prüfmodus das Komparatorsignal KS basierend auf dem Vergleich zwischen dem Messpotential MP und dem ersten Vergleichspotential VP1 bereitzustellen, und ausgebildet, in dem zweiten Prüfmodus das Komparatorsignal KS basierend auf dem Vergleich zwischen dem Messpotential MP und dem zweiten Vergleichspotential VP2 bereitzustellen.

Zweckmäßigerweise ist die Komparatoreinrichtung 16 ausgebildet, im ersten Prüfmodus kein Vergleich mit dem zweiten Vergleichspotential VP2 und im zweiten Prüfmodus kein Vergleich mit dem ersten Vergleichspotential VP1 durchzuführen.

Vorzugsweise findet in beiden Prüfmodi der jeweils durchgeführte Vergleich mit derselben Schaltung - insbesondere der Differenzverstärkerschaltung 43 - statt. So ist die Differenzverstärkerschaltung 43 zweckmäßigerweise ausgebildet, in dem ersten Prüfmodus das Messpotential MP mit dem ersten Vergleichspotential VP1 zu vergleichen, und ausgebildet, in dem zweiten Prüfmodus das Messpotential MP mit dem zweiten Vergleichspotential VP2 zu vergleichen.

Die Differenzverstärkerschaltung 43 verfügt exemplarisch über drei Eingänge 25, 26, 27. Wie exemplarisch in der Figur 3 gezeigt, ist der dritte Eingang 27 parallel zum zweiten Eingang 26 geschaltet. In der gezeigten exemplarischen Schaltungsimplementierung ist der zweite Eingang 26 ein Differenzverstärkereingang und wird durch eine Darlington-Schaltung gebildet, die die beiden Transistoren T2 und T3 umfasst. Alternativ kann der zweite Eingang 26 beispielsweise auch nur einen Transistor umfassen. Der dritte Eingang 27 wird nun bereitgestellt, indem parallel zu dem zweiten Eingang 26 - hier parallel zu der Darlington-Schaltung aus den Transistoren T2 und T3 - ein Transistor T4 geschaltet ist.

Zweckmäßigerweise ist die erste Schaltungsanordnung 12 ausgebildet, im ersten und zweiten Prüfmodus das Messpotential MP an dem ersten Eingang 25 bereitzustellen, die zweite Schaltungsanordnung 13 ist ausgebildet, im ersten Prüfmodus und im ersten Funktionstestmodus das erste Vergleichspotential VP1 an dem zweiten Eingang 26 bereitzustellen, und die dritte Schaltungsanordnung 18 ist ausgebildet, im zweiten Prüfmodus und im zweiten Funktionstestmodus das zweite Vergleichspotential VP2 an dem dritten Eingang 27 bereitzustellen.

Die Schutzleiter-Überwachungseinrichtung 300 ist dabei insbesondere ausgebildet, in dem ersten Prüfmodus und im ersten Funktionstestmodus zu verhindern, dass der Differenzverstärkerschaltung 43 das zweite Vergleichspotential VP2 bereitgestellt wird, und in dem zweiten Prüfmodus und im zweiten Funktionstestmodus zu verhindern, dass der Differenzverstärkerschaltung 43 das erste Vergleichspotential VP1 bereitgestellt wird.

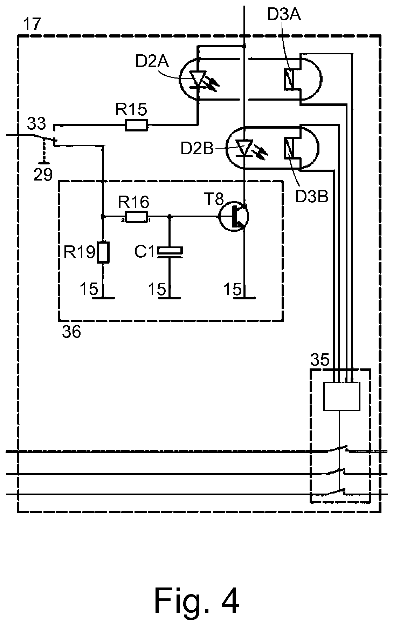

Zu diesem Zweck können beispielsweise die in den Figuren 3 und 4 gezeigten Schalter 31, 32 vorgesehen sein. Der erste Schalter 31 dient exemplarisch dazu, die elektrische Verbindung zwischen dem zweiten Eingang 26, exemplarisch dem Widerstand R6, und der Berührungsfläche 20 im ersten Prüfmodus und im ersten Funktionstestmodus herzustellen und im zweiten Prüfmodus und im zweiten Funktionstestmodus zu unterbrechen. Der zweite Schalter 32 dient exemplarisch dazu, die elektrische Verbindung zwischen dem dritten Eingang 27, exemplarisch dem Widerstand R9, und dem zweiten Ausgangsanschlusspunkte 15 im zweiten Prüfmodus und im zweiten Funktionstestmodus herzustellen und im ersten Prüfmodus und im ersten Funktionstestmodus zu unterbrechen.

Die Schalter 31, 32 können, wie in den Figuren 3 und 4 gezeigt, Teil der Schaltungsanordnungen 13, 18 bilden und insbesondere in Reihe zu den dort jeweils vorgesehenen Widerständen geschaltet sein.

Zweckmäßigerweise können beide Schalter 31, 32 über die Betätigungseinrichtung 29 betätigt werden. Zweckmäßigerweise lässt sich die Betätigungseinrichtung 29 in zwei verschiedene Stellungen versetzen und in jeder der Stellungen ist einer der Schalter 31, 32 geöffnet und der andere geschlossen.

Vorzugsweise ist die Stromverteilervorrichtung 1 ferner ausgebildet, gemäß dem aktuellen Prüfmodus und/oder Funktionstestmodus anzupassen, wie die Unterbrechung der internen elektrischen Leitung 37 bzw. der Ansteuerung des Schutzschalters 35 von dem Komparatorsignal KS abhängt.

Insbesondere ist die Stromverteilervorrichtung 1 ausgebildet, im ersten Prüfmodus (und im ersten Funktionstestmodus) die interne elektrische Leitung 37 in Ansprechen auf den ersten Komparatorsignal-Zustand des Komparatorsignals KS nicht zu unterbrechen und in Ansprechen auf den vom ersten Komparatorsignal-Zustand verschiedenen zweiten Komparatorsignal-Zustand des Komparatorsignals KS zu unterbrechen. Ferner ist die Stromverteilervorrichtung 1 ausgebildet, im zweiten Prüfmodus (und, soweit vorhanden, im zweiten Funktionstestmodus) die interne elektrische Leitung 37 in Ansprechen auf den zweiten Komparatorsignal-Zustand nicht zu unterbrechen und in Ansprechen auf den ersten Komparatorsignal-Zustand zu unterbrechen. Mit einem Komparatorsignal-Zustand ist insbesondere ein Signalwert oder ein Signalverlauf des Komparatorsignals KS gemeint. Beispielsweise sind mit den beiden Komparatorsignal-Zuständen ein L-Pegel (also ein Low-Pegel) und ein H-Pegel (also ein High-Pegel) des Komparatorsignals KS gemeint.

Exemplarisch hat das Komparatorsignal KS im ersten Komparatorsignal-Zustand einen H-Pegel und im zweiten Komparatorsignal-Zustand einen L-Pegel.

Zweckmäßigerweise ist die Stromverteilervorrichtung 1 ausgebildet, im ersten Prüfmodus und/oder ersten Funktionstestmodus die interne elektrische Leitung 37 in Ansprechen auf einen Komparatorsignal KS mit einem L-Pegel bzw. niedrigen Pegel zu unterbrechen und in Ansprechen auf ein Komparatorsignal KS mit einem H-Pegel bzw. hohen Pegel nicht zu unterbrechen. Bei diesem Beispiel ist die Stromverteilervorrichtung 1 vorzugsweise ferner ausgebildet, im zweiten Prüfmodus und/oder zweiten Funktionstestmodus die interne elektrische Leitung 37 in Ansprechen auf ein Komparatorsignal KS mit einem H-Pegel bzw. hohen Pegel zu unterbrechen und in Ansprechen auf ein Komparatorsignal KS mit einem L-Pegel bzw. niedrigen Pegel nicht zu unterbrechen.

Im ersten Prüfmodus liegt vorzugsweise bei dem ersten Komparatorsignal-Zustand der Normalzustand vor und bei dem zweiten Komparatorsignal-Zustand der Fehlerzustand. Im zweiten Prüfmodus liegt vorzugsweise bei dem zweiten Komparatorsignal-Zustand der Normalzustand vor und bei dem ersten Komparatorsignal-Zustand der Fehlerzustand.

Im ersten Funktionstestmodus zeigt zweckmäßigerweise der erste Komparatorsignal-Zustand an, dass die Schutzleiterüberwachung nicht funktioniert und der zweite Komparatorsignal-Zustand zeigt an, dass die Schutzleiterüberwachung funktioniert.

Im zweiten Funktionstestmodus zeigt zweckmäßigerweise der zweite Komparatorsignal-Zustand an, dass die Schutzleiterüberwachung nicht funktioniert und der erste Komparatorsignal-Zustand zeigt an, dass die Schutzleiterüberwachung funktioniert.

Exemplarisch verfügt die Schalteinrichtung 17 über einen dritten Schalter 33, über den die Abhängigkeit zwischen dem Komparatorsignal KS und der Ansteuerung des Schutzschalters 35 eingestellt werden kann. In einer ersten Schaltstellung, die zweckmäßigerweise im ersten Prüfmodus und/oder ersten Funktionstestmodus eingenommen wird, verbindet der Schalter 33 den Ausgang der Komparatoreinrichtung 16 oder das Komparatorsignal KS mit der Diode D2, so dass bei einem Komparatorsignal KS mit niedrigem Pegel (also L-Pegel) ein Strom durch die Diode D2 fließt. In einer zweiten Schaltstellung, die zweckmäßigerweise im zweiten Prüfmodus und/oder im zweiten Funktionstestmodus eingenommen wird, verbindet der Schalter 33 den Ausgang der Komparatoreinrichtung 16 bzw. das Komparatorsignal KS mit dem Speicherglied 36, so dass bei einem Komparatorsignal KS mit hohem Pegel (also H-Pegel) ein Strom durch die Diode D2 fließt.

Zweckmäßigerweise wird der dritte Schalter 33 über die Betätigungseinrichtung 29 betätigt.

In dem Beispiel der Figur 3 umfasst die Schutzleiter-Überwachungseinrichtung 300 ferner die der Strombegrenzung dienenden Widerstände R12, R13, R14. Es sei in diesem Zusammenhang angemerkt, dass diese Widerstände optionale Merkmale darstellen, die zur Lösung der Aufgabe nicht zwingend erforderlich sind.

Die in der Figuren 3 und 4 gezeigten Widerstände R1 bis R19 und der Kondensator C1 können beispielsweise mit den folgenden exemplarischen Werte implementiert werden: R1 = 56 kS2, R2 = 56 kS2, R3 = 60 MS2, R4 = 60 MS2, R5 = 1 MS2, R6 = 1 MS2, R7 = 56 kS2, R8 = 56 kS2, R9 = 1 kS2, R10 = 120 kS2, R11 = 470 kS2, R12 = 10 kS2, R13 = 8,2 kS2, R14 = 56 kQ, R15 = 220 kS2, R16 = 680 Q, R17 = 470 kS2, R18 = 470 kS2, R19 = 470 kS2, C1 = 22 uF.

Wie vorstehend bereits erwähnt, ist das Teilerverhältnis des zweiten Spannungsteilers (der zweiten Schaltungsanordnung 13) vorzugsweise kleiner als das des ersten Spannungsteilers (der ersten Schaltungsanordnung 12). Ferner ist das Teilerverhältnis des dritten Spannungsteilers (der dritten Schaltungsanordnung 18) vorzugsweise größer als das des ersten Spannungsteilers (der ersten Schaltungsanordnung 12).

Zweckmäßigerweise ist das Teilerverhältnis des zweiten Spannungsteilers ein Bruchteil des Teilerverhältnisses des ersten Spannungsteilers, beispielsweise 1/61. Zweckmäßigerweise ist das Teilerverhältnis des dritten Spannungsteilers wenigstens 0,5 % - 0,8 % größer als das des ersten Spannungsteilers. Exemplarisch beträgt das erste Teilerverhältnis 0,500, das zweite Teilerverhältnis 0,0164 und das dritte Teilerverhältnis 0,504.

Die Figur 4 zeigt eine weitere exemplarische Schaltungsimplementierung der Schalteinrichtung 17. Die Schalteinrichtung 17 verfügt hier über zwei Optokoppler: einen ersten Optokoppler, der von einer ersten Leuchtdiode D2A und einer ersten Photodiode D3A gebildet wird und einen zweiten Optokoppler, der von einer zweiten Leuchtdiode D2B und einer zweiten Photodiode D3B gebildet wird. Die erste Leuchtdiode D2A ist im ersten Prüfmodus und/oder im ersten Funktionstestmodus mit dem Ausgang der Komparatoreinrichtung 16 elektrisch verbunden und im zweiten Prüfmodus und/oder im zweiten Funktionstestmodus nicht. Im ersten Prüfmodus und/oder ersten Funktionstestmodus leuchtet die erste Leuchtdiode D2A abhängig davon, welcher Komparatorsignal-Zustand vorliegt. Im zweiten Prüfmodus und/oder zweiten Funktionstestmodus ist die erste Leuchtdiode D2A inaktiv.

Die zweite Leuchtdiode D2B ist mit der Speicherschaltung 36 elektrisch verbunden. Im ersten Prüfmodus und/oder ersten Funktionstestmodus ist die zweite Leuchtdiode D2B inaktiv. Im zweiten Prüfmodus und/oder zweiten Funktionstestmodus leuchtet die zweite Photodiode D2B abhängig von dem Ladezustand des Speicherglieds 36.

Die beiden Photodioden D3A, D3B sind jeweils mit dem Schutzschalter 35 gekoppelt und steuern den Schutzschalter 35 abhängig von dem Leuchtzustand der ersten Leuchtdiode D2A und/oder der zweiten Leuchtdiode D2B an, um zu bewirken, dass die interne elektrische Leitung 37 wahlweise unterbrochen oder nicht unterbrochen wird.

Exemplarisch wird die interne elektrische Leitung 37 im ersten Prüfmodus in Ansprechen darauf unterbrochen, dass das Messpotential MP kleiner als das erste Vergleichspotential VP1 ist. Ebenso wird die interne elektrische Leitung 37 im ersten Funktionstestmodus in Ansprechen darauf unterbrochen, dass das Funktionstestpotential STP kleiner als das erste Vergleichspotential VP1 ist. In diesem Fall nimmt das Komparatorsignal KS einen niedrigen Pegel bzw. einen L-Pegel an, so dass ein Strom durch die erste Leuchtdiode D2A fließt und die erste Photodiode D3A angeregt wird bzw. ein Signal bereitstellt, das wiederum bewirkt, dass der Schutzschalter 35 die interne elektrische Leitung 2 unterbricht.

Exemplarisch wird die interne elektrische Leitung 37 im zweiten Prüfmodus in Ansprechen darauf unterbrochen, dass das Messpotential MP größer als das zweite Vergleichspotential VP2 ist. In diesem Fall nimmt das Komparatorsignal KS einen hohen Pegel bzw. einen H-Pegel an, so dass das Speicherglied 36 geladen wird und schließlich der Transistor T8 schaltet, so dass ein Strom durch die zweite Leuchtdiode D2B fließt und die zweite Photodiode D3B angeregt wird bzw. ein Signal bereitstellt, das wiederum bewirkt, dass der Schutzschalter 35 die interne elektrische Leitung 37 unterbricht.

Exemplarisch ist seriell zur ersten Leuchtdiode D2A ein Widerstand R15 geschaltet. Gemäß einer nicht gezeigten Ausgestaltung ist ein entsprechender Widerstand in der Schaltungsimplementierung gemäß Figur 3 vorhanden - also seriell zur Leuchtdiode D2.

Ferner ist exemplarisch ein Widerstand R16 zwischen den Kondensator C1 und den Ausgang der Komparatoreinrichtung 16 geschaltet, um das Eingangssignal des Transistors T8 zu glätten. Gemäß einer nicht gezeigten Ausgestaltung ist ein entsprechender Widerstand in der Schaltungsimplementierung gemäß Figur 3 vorhanden.

## Patentansprüche

1. Schutzleiter-Überwachungseinrichtung (100; 300) zur Erkennung einer Schutzleiterstörung einer elektrischen Leitung (2), umfassend
- einen ersten Anschlusspunkt (3) zur Verbindung mit einem Schutzleiter (4) der elektrischen Leitung (2),
- eine Detektionsschaltung (5) mit einem ersten Eingang (25) zum Anlegen eines Messpotentials (MP) und einem zweiten Eingang (26) zum Anlegen eines Vergleichspotentials (VP), wobei
- die Schutzleiter-Überwachungseinrichtung (100; 300) ausgebildet ist, einen Prüfmodus einzunehmen, in dem der erste Eingang (25) elektrisch mit dem ersten Anschlusspunkt (3) verbunden ist und das am ersten Eingang anliegende Messpotential (MP) von dem elektrischen Potential (AP) des ersten Anschlusspunkts (3) bestimmt wird, und
- die Schutzleiter-Überwachungseinrichtung (100; 300) ferner ausgebildet ist, in dem Prüfmodus unter Verwendung der Detektionsschaltung (5) die Schutzleiterstörung auf Basis des Messpotentials (MP) und des Vergleichspotentials (VP) zu erkennen und gemäß der erkannten Schutzleiterstörung ein Detektionssignal (DS) bereitzustellen,
**dadurch gekennzeichnet, dass**
die Schutzleiter-Überwachungseinrichtung (100; 300) ferner ausgebildet ist, in einen Funktionstestmodus zu wechseln und im Funktionstestmodus das am ersten Eingang (25) anliegende Potential zu einem Funktionstestpotential (STP) zu ändern und unter Verwendung der Detektionsschaltung (5) einen Funktionstest der Schutzleiter-Überwachungseinrichtung (100; 300) auf Basis des Funktionstestpotentials (STP) und des Vergleichspotentials (VP) durchzuführen.

2. Schutzleiter-Überwachungseinrichtung (300) nach Anspruch 1, ferner umfassend einen Schutzschalter (35) zur Unterbrechung einer elektrischen Verbindung zu der elektrischen Leitung (2), wobei die Schutzleiter-Überwachungseinrichtung (300) ausgebildet ist, im Funktionstestmodus durch die Änderung des am ersten Eingang (25) anliegenden Potentials zu dem Funktionstestpotential (STP) ein Schalten des Schutzschalters (35) zu bewirken.

3. Schutzleiter-Überwachungseinrichtung (100; 300) nach einem voranstehenden Anspruch, wobei die Schutzleiter-Überwachungseinrichtung (100; 300) ausgebildet ist, in dem Funktionstestmodus durch die Änderung des am ersten Eingang (25) anliegenden Potentials zu dem Funktionstestpotential (STP) für die Detektionsschaltung (5) eine Schutzleiterstörung zu simulieren, so dass das Detektionssignal (DS) im Funktionstestmodus die Schutzleiterstörung anzeigt.

4. Schutzleiter-Überwachungseinrichtung (100; 300) nach einem voranstehenden Anspruch, ferner umfassend eine elektrisch leitende Berührungsfläche (20) zur Berührung durch einen Benutzer, wobei die Schutzleiter-Überwachungseinrichtung (100; 300) ausgebildet ist, das Vergleichspotential (VP) im Prüfmodus und/oder im Funktionstestmodus auf Basis eines an der Berührungsfläche (20) anliegenden Benutzerpotentials (BP) bereitzustellen.

5. Schutzleiter-Überwachungseinrichtung (100; 300) nach Anspruch 4, wobei die Schutzleiter-Überwachungseinrichtung (100; 300) ausgebildet ist, in einem Zustand, in dem der Benutzer die Berührungsfläche (20) berührt und die Schutzleiterstörung nicht vorliegt, im Funktionstestmodus durch die Änderung des am ersten Eingangs (25) anliegenden Potentials zu dem Funktionstestpotential (STP) für die Detektionsschaltung (5) eine Schutzleiterstörung zu simulieren, so dass das Detektionssignal (DS) im Funktionstestmodus die Schutzleiterstörung anzeigt.

6. Schutzleiter-Überwachungseinrichtung (100; 300) nach einem der voranstehenden Ansprüche, wobei die Schutzleiter-Überwachungseinrichtung (100, 300) ausgebildet ist, im Funktionstestmodus den ersten Eingang (25) elektrisch von dem ersten Anschlusspunkt (3) zu trennen.

7. Schutzleiter-Überwachungseinrichtung (100; 300) nach einem der voranstehenden Ansprüche, ferner umfassend eine Funktionstest-Betätigungseinrichtung 41, die durch einen Benutzer betätigbar ist, um die Schutzleiter-Überwachungseinrichtung 100 in den Funktionstestmodus zu versetzen.

8. Schutzleiter-Überwachungseinrichtung (300) nach einem der voranstehenden Ansprüche, wobei die Detektionsschaltung (5) eine Komparatoreinrichtung (16), beispielsweise eine Differenzverstärkerschaltung (43), umfasst, die ausgebildet ist, im Funktionstestmodus das Funktionstestpotential (STP) mit dem Vergleichspotential (VP) zu vergleichen.

9. Schutzleiter-Überwachungseinrichtung (300) nach einem voranstehenden Anspruch, wobei der Prüfmodus ein erster Prüfmodus ist, die Schutzleiterstörung eine erste Schutzleiterstörung ist, der Funktionstest ein erster Funktionstest ist, das Vergleichspotential (VP) ein erstes Vergleichspotential (VP1) ist und das Funktionstestpotential (STP) ein erstes Funktionstestpotential ist, und wobei die Schutzleiter-Überwachungseinrichtung (300) ausgebildet ist, in einen zweiten Prüfmodus zu wechseln und im zweiten Prüfmodus unter Verwendung der Detektionsschaltung (5) eine zweite Schutzleiterstörung auf Basis des Messpotentials (MP) und eines zweiten Vergleichspotentials (VP2) zu erkennen und wobei die Schutzleiter-Überwachungseinrichtung (300) ferner ausgebildet ist, in einen zweiten Funktionstestmodus zu wechseln und im zweiten Funktionstestmodus das am ersten Eingang (25) anliegende Potential zu dem ersten Funktionstestpotential oder einem zweiten Funktionstestpotential zu ändern und unter Verwendung der Detektionsschaltung (5) einen zweiten Funktionstest der Schutzleiter-Überwachungseinrichtung (100; 300) auf Basis des ersten oder zweiten Funktionstestpotentials und des zweiten Vergleichspotentials (VP2) durchzuführen.

10. Stromverteilervorrichtung (1) zur Bereitstellung einer von der elektrischen Leitung (2) zugeführten Netzspannung an einen oder mehrere Verbraucher, umfassend eine Schutzleiter-Überwachungseinrichtung (100; 300) nach einem der voranstehenden Ansprüche.

11. Stromverteilervorrichtung (1) nach Anspruch 10, ferner umfassend einen Netzstecker (22) und/oder eine Steckdose (23), wobei der erste Anschlusspunkt (3) mit einem Schutzleiterkontakt (52) des Netzsteckers (22) und/oder einem Schutzleiterkontakt (53) der Steckdose (23) elektrisch verbunden ist.

12. Verfahren zum Durchführen eines Funktionstests einer Schutzleiter-Überwachungseinrichtung (100; 300), die der Erkennung einer Schutzleiterstörung einer elektrischen Leitung dient, umfassend die Schritte:
Bereitstellen eines Messpotentials (MP) an einem ersten Eingang (25) einer Detektionsschaltung (5) der Schutzleiter-Überwachungseinrichtung (100; 300), wobei das Messpotential (MP) von einem Potential eines Schutzleiters (4) der elektrischen Leitung (2) abhängt,
Bereitstellen eines Vergleichspotentials (VP) an einem zweiten Eingang (26) der Detektionsschaltung (5),
Ändern des am ersten Eingang (25) anliegenden Potentials zu einem Funktionstestpotential (STP) und
Durchführen, unter Verwendung der Detektionsschaltung (5), des Funktionstests auf Basis des Funktionstestpotentials (STP) und des Vergleichspotentials (VP).

13. Verfahren nach Anspruch 12, wobei das Verfahren unter Verwendung einer Schutzleiter-Überwachungseinrichtung (300) nach einem der Ansprüche 1 bis 9 durchgeführt wird.

## Claims

1. Protective conductor monitoring device (100; 300) for detecting a protective conductor fault of an electrical line (2), comprising
- a first connection point (3) for connection to a protective conductor (4) of the electrical line (2),
- a detection circuit (5) having a first input (25) for applying a measurement potential (MP) and a second input (26) for applying a comparison potential (VP), wherein
- the protective conductor monitoring device (100; 300) is configured to adopt a checking mode in which the first input (25) is electrically connected to the first connection point (3) and the measurement potential (MP) applied to the first input is determined by the electrical potential (AP) of the first connection point (3), and
- the protective conductor monitoring device (100; 300) is further configured to detect, using the detection circuit (5), the protective conductor fault in the checking mode on the basis of the measurement potential (MP) and the comparison potential (VP) and to provide a detection signal (DS) in accordance with the detected protective conductor fault,
**characterized in that**
the protective conductor monitoring device (100; 300) is further configured to change to a function test mode and, in the function test mode, to change the potential present at the first input (25) to a function test potential (STP) and, using the detection circuit (5), to carry out a function test of the protective conductor monitoring device (100; 300) on the basis of the function test potential (STP) and the comparison potential (VP).

2. Protective conductor monitoring device (300) according to claim 1, further comprising a protective switch (35) for interrupting an electrical connection to the electrical line (2), wherein the protective conductor monitoring device (300) is configured to cause switching of the protective switch (35) in the function test mode by the change of the potential applied to the first input (25) to the function test potential (STP).

3. Protective conductor monitoring device (100; 300) according to a preceding claim, wherein the protective conductor monitoring device (100; 300) is configured to simulate a protective conductor fault for the detection circuit (5) in the function test mode by changing the potential applied to the first input (25) to the function test potential (STP), so that the detection signal (DS) indicates the protective conductor fault in the function test mode.

4. Protective conductor monitoring device (100; 300) according to a preceding claim, further comprising an electrically conductive contact surface (20) for contact by a user, wherein the protective conductor monitoring device (100; 300) is configured to provide the comparison potential (VP) in the checking mode and/or in the function test mode on the basis of a user potential (BP) applied to the contact surface (20).

5. Protective conductor monitoring device (100; 300) according to claim 4, wherein the protective conductor monitoring device (100; 300) is configured to simulate, in a state in which the user touches the contact surface (20) and the protective conductor fault is not present, a protective conductor fault in the function test mode for the detection circuit (5) by changing the potential applied to the first input (25) to the function test potential (STP), so that the detection signal (DS) indicates the protective conductor fault in the function test mode.

6. Protective conductor monitoring device (100; 300) according to one of the preceding claims, wherein the protective conductor monitoring device (100, 300) is configured to electrically disconnect the first input (25) from the first connection point (3) in the function test mode.

7. Protective conductor monitoring device (100; 300) according to any one of the preceding claims, further comprising a function test actuating device 41 operable by a user to put the protective conductor monitoring device 100 into the function test mode.

8. Protective conductor monitoring device (300) according to any one of the preceding claims, wherein the detection circuit (5) comprises a comparator device (16), for example a differential amplifier circuit (43), adapted to compare the function test potential (STP) with the comparison potential (VP) in the function test mode.

9. Protective conductor monitoring device (300) according to a preceding claim, wherein the checking mode is a first checking mode, the protective conductor fault is a first protective conductor fault, the function test is a first function test, the comparison potential (VP) is a first comparison potential (VP1) and the function test potential (STP) is a first function test potential, and wherein the protective conductor monitoring device (300) is configured to switch to a second checking mode and, in the second checking mode, to detect, using the detection circuit (5), a second protective conductor fault on the basis of the measurement potential (MP) and a second comparison potential (VP2), and wherein the protective conductor monitoring device (300) is further configured to switch to a second function test mode and, in the second function test mode, to change the potential applied to the first input (25) to the first function test potential or a second function test potential and, using the detection circuit (5), to perform a second function test of the protective conductor monitoring device (100; 300) based on the first or second function test potential and the second comparison potential (VP2).

10. Current distribution device (1) for providing a mains voltage supplied from the electrical line (2) to one or more consumers, comprising a protective conductor monitoring device (100; 300) according to any of the preceding claims.

11. Power distribution device (1) according to claim 10, further comprising a mains plug (22) and/or a socket (23), wherein the first connection point (3) is electrically connected to a protective conductor contact (52) of the mains plug (22) and/or a protective conductor contact (53) of the socket (23).

12. Method for carrying out a function test of a protective conductor monitoring device (100; 300) which serves to detect a protective conductor fault of an electrical line, comprising the steps:
providing a measurement potential (MP) at a first input (25) of a detection circuit (5) of the protective conductor monitoring device (100; 300), the measurement potential (MP) depending on a potential of a protective conductor (4) of the electrical line (2),
providing a comparison potential (VP) at a second input (26) of the detection circuit (5),
changing the potential applied to the first input (25) to a function test potential (STP), and
performing, using the detection circuit (5), the function test based on the function test potential (STP) and the comparison potential (VP).

13. The method according to claim 12, wherein the method is performed using a protective conductor monitoring device (300) according to any one of claims 1 to 9.

## Revendications

1. Agencement de surveillance d'un conducteur de protection (100 ; 300) pour la reconnaissance d'une panne de conducteur de protection d'une ligne (2) électrique, comprenant
- un premier point de raccordement (3) pour la liaison avec un conducteur de protection (4) de la ligne (2) électrique,
- un circuit de détection (5) avec une première entrée (25) pour l'application d'un potentiel de mesure (MP) et une seconde entrée (26) pour l'application d'un potentiel de comparaison (VP), dans lequel
- l'agencement de surveillance d'un conducteur de protection (100 ; 300) est réalisé afin d'occuper un mode de contrôle, dans lequel la première entrée (25) est électriquement reliée au premier point de raccordement (3) et le potentiel de mesure (MP) appliqué à la première entrée est déterminé par le potentiel (MP) électrique du premier point de raccordement (3), et
- l'agencement de surveillance d'un conducteur de protection (100 ; 300) est de plus réalisé afin de reconnaître dans le mode de contrôle en utilisant le circuit de détection (5) la panne de conducteur de protection sur la base du potentiel de mesure (MP) et du potentiel de comparaison (VP) et de fournir un signal de détection (DS) selon la panne de conducteur de protection reconnue,
**caractérisé en ce que**
l'agencement de surveillance d'un conducteur de protection (100 ; 300) est de plus réalisé afin de passer dans un mode de test de fonctionnement et de modifier en mode de test de fonctionnement le potentiel appliqué à la première entrée (25) en un potentiel de test de fonctionnement (STP) et de réaliser en utilisant le circuit de détection (5) un test de fonctionnement de l'agencement de surveillance d'un conducteur de protection (100 ; 300) sur la base du potentiel de test de fonctionnement (STP) et du potentiel de comparaison (VP).

2. Agencement de surveillance d'un conducteur de protection (300) selon la revendication 1, comprenant de plus un disjoncteur (35) pour l'interruption d'une liaison électrique avec la ligne électrique (2), dans lequel l'agencement de surveillance d'un conducteur de protection (300) est réalisé afin de provoquer dans le mode de test de fonctionnement par la modification du potentiel appliqué à la première entrée (25) en potentiel test de fonctionnement (STP) une commutation du disjoncteur (35).

3. Agencement de surveillance d'un conducteur de protection (100 ; 300) selon une revendication précédente, dans lequel l'agencement de surveillance d'un conducteur de protection (100 ; 300) est réalisé afin de simuler dans le mode de test de fonctionnement par la modification du potentiel appliqué à la première entrée (25) en potentiel de test de fonctionnement (STP) pour le circuit de détection (5) une panne de conducteur de protection de sorte que le signal de détection (DS) indique la panne de conducteur de protection dans le mode de test de fonctionnement.

4. Agencement de surveillance d'un conducteur de protection (100 ; 300) selon une revendication précédente, comprenant de plus une surface de contact (20) électroconductrice pour le contact par un utilisateur, dans lequel l'agencement de surveillance d'un conducteur de protection (100 ; 300) est réalisé afin de fournir le potentiel de comparaison (VP) dans le mode de contrôle et/ou dans le mode de test de fonctionnement sur la base d'un potentiel d'utilisateur (BP) appliqué à la surface de contact (20).

5. Agencement de surveillance d'un conducteur de protection (100 ; 300) selon la revendication 4, dans lequel l'agencement de surveillance d'un conducteur de protection (100 ; 300) est réalisé afin de simuler dans un état, dans lequel l'utilisateur touche la surface de contact (20) et la panne de conducteur de protection ne se présente pas, dans le mode de test de fonctionnement par la modification du potentiel appliqué à la première entrée (25) en potentiel de test de fonctionnement (STP) pour le circuit de détection (5) une panne de conducteur de protection de sorte que le signal de détection (DS) indique la panne de conducteur de protection dans le mode de test de fonctionnement.

6. Agencement de surveillance d'un conducteur de protection (100 ; 300) selon l'une des revendications précédentes, dans lequel l'agencement de surveillance d'un conducteur de protection (100, 300) est réalisé afin de séparer dans le mode de test de fonctionnement la première entrée (25) électriquement du premier point de raccordement (3).

7. Agencement de surveillance d'un conducteur de protection (100 ; 300) selon l'une des revendications précédentes, comprenant de plus un dispositif d'actionnement de test de fonctionnement (41) qui est actionnable par un utilisateur afin d'amener l'agencement de surveillance d'un conducteur de protection (100) dans le mode test de fonctionnement.

8. Agencement de surveillance d'un conducteur de protection (300) selon l'une des revendications précédentes, dans lequel le circuit de détection (5) comporte un dispositif comparateur (16), par exemple un circuit d'amplification de différence (43) qui est réalisé afin de comparer dans le mode de test de fonctionnement le potentiel de test de fonctionnement (STP) avec le potentiel de comparaison (VP).

9. Agencement de surveillance d'un conducteur de protection (300) selon une revendication précédente, dans lequel le mode de contrôle est un premier mode de contrôle, la panne de conducteur de protection est une première panne de conducteur de protection, le test de fonctionnement est un premier test de fonctionnement, le potentiel de comparaison (VP) est un premier potentiel de comparaison (VP1) et le potentiel de test de fonctionnement (STP) est un premier potentiel de test de fonctionnement, et dans lequel l'agencement de surveillance d'un conducteur de protection (300) est réalisé afin de passer dans un second mode de contrôle et de reconnaître dans le second mode de contrôle en utilisant le circuit de détection (5) une seconde panne de conducteur de protection sur la base du potentiel de mesure (MP) et d'un second potentiel de comparaison (VP2) et dans lequel l'agencement de surveillance d'un conducteur de protection (300) est de plus réalisé afin de passer dans un second mode de test de fonctionnement et dans le second mode de test de fonctionnement de modifier le potentiel appliqué à la première entrée (25) en premier potentiel de test de fonctionnement et en utilisant le circuit de détection (5) de réaliser un second test de fonctionnement de l'agencement de surveillance d'un conducteur de protection (100 ; 300) sur la base du premier ou du second potentiel de test de fonctionnement et du second potentiel de comparaison (VP2).

10. Dispositif de distribution de courant (1) pour la fourniture d'une tension de réseau fournie par la ligne (2) électrique à un ou plusieurs consommateurs, comprenant un agencement de surveillance d'un conducteur de protection (100 ; 300) selon l'une des revendications précédentes.

11. Dispositif de distribution de courant (1) selon la revendication 10, comprenant de plus une fiche de secteur (22) et/ou une prise femelle (23), dans lequel le premier point de raccordement (3) est électriquement relié à un contact de conducteur de protection (52) de la fiche de secteur (22) et/ou à un contact de conducteur de protection (53) de la prise femelle (23).

12. Procédé de réalisation d'un test de fonctionnement d'un agencement de surveillance d'un conducteur de protection (100 ; 300) qui sert à la reconnaissance d'une panne de conducteur de protection d'une ligne électrique, comprenant les étapes :
la fourniture d'un potentiel de mesure (MP) à une première entrée (25) d'un circuit de détection (5) de l'agencement de surveillance d'un conducteur de protection (100 ; 300), dans lequel le potentiel de mesure (MP) dépend d'un potentiel d'un conducteur de protection (4) de la ligne (2) électrique,
la fourniture d'un potentiel de comparaison (VP) à une seconde entrée (26) du circuit de détection (5),
la modification du potentiel appliqué à la première entrée (25) en un potentiel de test de fonctionnement (STP) et
la réalisation en utilisant le circuit de détection (5) du test de fonctionnement sur la base du potentiel de test de fonctionnement (STP) et du potentiel de comparaison (VP).

13. Procédé selon la revendication 12, dans lequel le procédé est réalisé en utilisant un agencement de surveillance d'un conducteur de protection (300) selon l'une des revendications 1 à 9.
